# FASCICULE DE BREVET EUROPEEN

(11) **EP 3 403 218 B1**
(45) Date de publication et mention de la délivrance du brevet: **13.03.2024**
(21) Numéro de dépôt: 17700292.0
(22) Date de dépôt: 12.01.2017
(51) Int. Cl.: G06V 10/46, G06V 10/96, G06T 1/20

(54) **DISPOSITIF DE SELECTION ET DESCRIPTION DE POINTS D'INTERETS DANS UNE SEQUENCE D'IMAGES, PAR EXEMPLE POUR L'APPARIEMENT DE POINTS D'INTERETS**
VORRICHTUNG ZUR AUSWAHL UND BESCHREIBUNG VON INTERESTPUNKTEN IN EINER BILDSEQUENZ, Z.B. FÜR DIE PAARUNG VON INTERESTPUNKTEN
DEVICE FOR SELECTING AND DESCRIBING POINTS OF INTEREST IN A SEQUENCE OF IMAGES, FOR EXAMPLE FOR THE PAIRING OF POINTS OF INTEREST

(30) Priorité: 13.01.2016 FR 1650238
(43) Date de publication de la demande: 21.11.2018
(73) Titulaire: Commissariat à l'Énergie Atomique et aux Énergies Alternatives, 75015 Paris (FR)
(72) Inventeur: DAROUICH, Mehdi, 92260 Fontenay Aux Roses (FR); LEPECQ, Maria, 92340 Bourg-La-Reine (FR)
(74) Mandataire: Atout PI Laplace
(86) Numéro de dépôt international: PCT/EP2017/050569
(87) Numéro de publication internationale: WO 2017/121804

(56) Documents cités:
- CN-A- 104 182 974
- US-A1- 2013 216 097
- FAN XITIAN ET AL: "Implementation of high performance hardware architecture of OpenSURF algorithm on FPGA", 2013 INTERNATIONAL CONFERENCE ON FIELD-PROGRAMMABLE TECHNOLOGY (FPT), IEEE, 9 décembre 2013 (2013-12-09), pages 152-159, XP032555009, DOI: 10.1109/FPT.2013.6718346 cité dans la demande
- WANG JIANHUI ET AL: "An Embedded System-on-Chip Architecture for Real-time Visual Detection and Matching", IEEE TRANSACTIONS ON CIRCUITS AND SYSTEMS FOR VIDEO TECHNOLOGY, IEEE SERVICE CENTER, PISCATAWAY, NJ, US, vol. 24, no. 3, 1 mars 2014 (2014-03-01), pages 525-538, XP011542198, ISSN: 1051-8215, DOI: 10.1109/TCSVT.2013.2280040 [extrait le 2014-03-03] cité dans la demande
- CHEN CHAOXIU ET AL: "A real-time FPGA-based architecture for OpenSURF", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, vol. 9813, 14 décembre 2015 (2015-12-14), pages 98130K-98130K, XP060063198, DOI: 10.1117/12.2205633 ISBN: 978-1-62841-730-2
- LOWE D G: "Distinctive image features from scale-invariant keypoints", INTERNATIONAL JOURNAL OF COMPUTER VISION, DORDRECHT, NL, vol. 60, no. 2, 1 janvier 2004 (2004-01-01), pages 91-110, XP002377339,
- PENG CHEN ET AL: "Adaptive Pipeline Parallelism for Image Feature Extraction Algorithms", PARALLEL PROCESSING (ICPP), 2012 41ST INTERNATIONAL CONFERENCE ON, IEEE, 10 September 2012 (2012-09-10), pages 299-308, XP032265785, DOI: 10.1109/ICPP.2012.14 ISBN: 978-1-4673-2508-0

## Description

L'invention concerne le domaine des architectures de calculateurs embarqués pour des applications de traitement d'images et plus précisément de vision par ordinateur.

L'invention porte plus précisément sur un dispositif de calcul mettant en oeuvre une fonction de sélection et de description de points d'intérêts dans une séquence d'images, cette fonction étant particulièrement importante dans le domaine de la vision par ordinateur et en particulier pour l'analyse de scène dans un flux d'images.

L'invention porte également sur l'application d'un tel dispositif pour réaliser une fonction d'appariement de points d'intérêts décrits entre deux images, appartenant à la même séquence ou à deux séquences différentes.

L'identification et l'utilisation de points d'intérêts dans une image est une fonction bien connue du domaine de la vision embarquée.

Usuellement, on distingue trois fonctions principales qui exploitent la notion de points d'intérêts dans une image : une première fonction de détection de points d'intérêts dans une image ou une séquence d'images, une deuxième fonction de calcul de descripteurs pour les points d'intérêts détectés par la première fonction et une troisième fonction d'appariement de points d'intérêts issues de deux images distinctes à partir des descripteurs calculés.

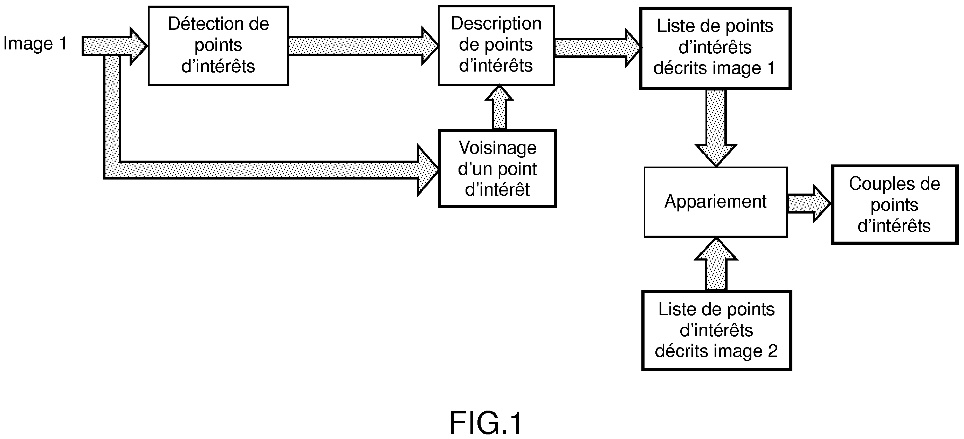

La figure 1 schématise l'enchainement de ces trois fonctions dans le contexte d'un dispositif d'appariement de points d'intérêts entre deux images (image 1, image 2).

La première fonction de détection consiste à déterminer la position, dans une image, de points remarquables, appelés points d'intérêts qui sont des points dont la position peut évoluer temporellement mais dont la présence est relativement stable d'une image à l'autre. Ces points d'intérêts peuvent être par exemple des coins, des bords ou d'autres éléments caractérisables d'une scène, par une méthode de détection donnée. Les méthodes de détection de points d'intérêts connues produisent, pour chaque point d'intérêt, au moins sa position dans le plan de l'image et un score de détection. D'autres données de caractérisation du point d'intérêt peuvent être générées telles que l'orientation ou le facteur d'échelle du point d'intérêt.

La deuxième fonction de calcul de descripteurs a pour but de décrire chaque point d'intérêt d'une manière robuste. Les méthodes existantes se basent souvent sur l'interprétation du voisinage de pixels autour de la position du point d'intérêt. Pour chaque point d'intérêt, une structure vectorielle appelée descripteur est générée dont la taille varie en fonction de la méthode utilisée.

Les méthodes de détection et description de points d'intérêts dans une image sont nombreuses. Deux exemples sont notamment décrits dans le brevet américain US 671293 qui décrit la méthode connue sous l'acronyme SIFT « Scale Invariant Feature Transform » et dans le brevet européen EP2027558 qui décrit la méthode connue sous l'acronyme SURF « Speeded Up Robust Features ». Un autre exemple est donné par Peng Chen et al., "Adaptive Pipeline Parallelism for Image Feature Extraction Algorithms", DOI: 10.1 109/ICPP.2012.14.

La troisième fonction d'appariement de points d'intérêts a pour but d'associer chaque point d'intérêt détecté dans une image aux points d'intérêts détectés dans une autre image de référence. L'image de référence peut être une image antérieure du même flux dont provient l'image analysée ou une image provenant d'un autre flux mais qui correspond à une prise de vue de la même scène ou encore une image issue d'une base de données statistique. L'étape d'appariement utilise les descripteurs calculés lors de la deuxième étape pour associer deux points d'intérêts selon un critère de proximité ou de ressemblance.

Les méthodes d'appariement de points d'intérêts sont applicables notamment dans le domaine du suivi d'objets pour lequel un appariement est effectué entre une image N et une image antérieure N-k dans le même flux d'image, on parle alors d'appariement temporel. Une autre application visée concerne la stéréovision pour laquelle un appariement est réalisé entre deux images d'un point de vue de la même scène dans deux flux d'images différents, on parle alors d'appariement spatial. D'autres applications encore visent à apparier une image avec un modèle préenregistré.

L'invention qui est décrite plus en détail dans la suite du document porte sur une architecture particulière d'un dispositif de calcul compatible avec toute méthode de détection, description et appariement de points d'intérêts.

Le nombre de points d'intérêts détectables dans une image n'est pas déterministe. En effet, ce nombre dépend des caractéristiques intrinsèques de l'image et n'est pas prédictible. En outre le calcul de descripteur sur un point d'intérêt est un calcul relativement complexe selon la méthode utilisée ce qui implique que le calcul des descripteurs pour les points d'intérêts d'une image entière est une approche très couteuse en temps de calcul. Dans un contexte d'applications embarquées pour lesquelles une contrainte de traitement temps-réel existe, l'étape de calcul de descripteurs peut entrainer une rupture des exigences temps réel dans le fonctionnement global de l'architecture d'appariement.

Un autre problème vient du fait que les étapes de détection et de description de points d'intérêts utilisent des voisinages de pixels de l'image et impliquent la mémorisation d'une grande portion de l'image voire, bien souvent, de l'image complète. Or l'utilisation d'une mémoire dimensionnée pour sauvegarder une image complète est bien souvent incompatible avec la contrainte de latence faible imposée par l'exigence temps-réel ainsi qu'avec les contraintes de zones mémoires disponibles sur une architecture embarquée.

Le problème visé par l'invention consiste donc à concevoir une architecture temps réel pour la mise en oeuvre d'une méthode de sélection et description et/ou d'appariement de points d'intérêts à répartition non déterministe dans une image reçue en flux temps réel qui permette de respecter les contraintes de vitesse d'exécution, de latence faible et de minimisation des zones mémoires.

Une première solution connue permettant d'implémenter sous forme purement logicielle une méthode d'appariement de points d'intérêts consiste à enchainer les trois étapes décrites ci-dessus en effectuant les traitements sur l'intégralité d'une image. Cette solution n'est pas compatible d'une architecture matérielle embarquée avec contraintes temps réel pour les raisons évoquées précédemment.

On connait par ailleurs des solutions d'implémentation matérielle de tels algorithmes. Le document « Implementation of High Performance hardware architecture of OpenSURF algorithm on FPGA, Xitian Fan, 2013 » décrit l'implémentation d'une méthode qui base sa détection et sa description de points d'intérêts sur l'algorithme SURF. L'extraction de points d'intérêts s'effectue sans aucun tri et tous les points d'intérêts détectés sont décrits. Le temps de traitement dépend ainsi du nombre de points d'intérêts extraits. Cette solution présente les mêmes inconvénients que ceux déjà évoqués.

On connait également la solution décrite dans le document « An embedded system-on-chip architecture for real time visual détection and matching, Jianhui Wang, 2013 ». Ce document décrit une implémentation d'une méthode qui comprend une étape de détection de points d'intérêts basée sur l'algorithme SIFT et une étape de description de points d'intérêts et d'appariement basée sur l'algorithme BRIEF (Binary Robust Indépendant Elementary Features). Les points d'intérêts détectés sont placés dans une file d'attente du type FIFO et sont traités un par un par l'étape de description. La charge de calcul et les aspects de synchronisation sont gérés par un mécanisme qui teste la position d'un point d'intérêt par rapport à la zone de voisinage d'image en mémoire. Si le point d'intérêt est reçu en avance par rapport au rafraichissement de la zone mémoire de voisinage, un mécanisme d'attente bloquante est enclenché. Si au contraire, le point d'intérêt est reçu en retard, il n'est pas traité et on passe directement au point d'intérêt suivant.

Cette solution est peu robuste à une répartition locale non homogène des points d'intérêts dans l'image. En effet, si on reçoit beaucoup de points d'intérêts localisés dans une zone de l'image, il y a risque d'en perdre beaucoup. De même si aucun point d'intérêt n'est reçu dans une grande zone de l'image, un intervalle temporel important est non exploité. En outre, l'étape d'appariement contient une double boucle imbriquée sur l'ensemble des points d'intérêts. Il est nécessaire que tous les points d'intérêts d'une image soient calculés pour faire un appariement avec une autre image. Cet aspect introduit une forte latence pour des applications de stéréovision où les deux images sont traitées en simultané. En outre, deux mémoires image sont nécessaires.

L'invention vise à résoudre les limitations des solutions de l'art antérieur, telles qu'évoquées ci-dessus, en proposant une architecture d'un dispositif de calcul d'appariement de points d'intérêts qui permet un traitement de l'image par bandeaux ou par zones de sorte à pouvoir accélérer le traitement des étapes de description de points d'intérêts et d'appariement en limitant le nombre de calculs à effectuer. L'invention se base pour cela sur une approche de calcul spéculative de points d'intérêts permettant de respecter les contraintes imposées par le flux d'image (cadence pixel) grâce à un mécanisme d'indexation unique des points d'intérêts sélectionnés facilitant la gestion des flux de données entre les briques fonctionnelles. Elle permet en outre de s'affranchir de mémoires d'image lors des enchainements entre briques fonctionnelles et lors des calculs d'appariement de points d'intérêts.

L'invention concerne ainsi un dispositif de calcul pour la sélection et la description de points d'intérêts dans au moins une image décomposée en une pluralité de bandeaux, selon la revendication 1.

Selon un aspect particulier de l'invention, le dispositif de calcul comprend en outre au moins une mémoire de voisinage interfacée avec le deuxième module pour le calcul de descripteurs de points d'intérêts et un circuit de synchronisation apte à recevoir une séquence d'images sous la forme d'un flux de pixels et à transmettre ledit flux de pixels vers la mémoire de voisinage avec un retard configuré pour synchroniser le contenu de la mémoire de voisinage avec le calcul d'un descripteur d'un point d'intérêt courant.

Selon un aspect particulier de l'invention, la sélection de P points d'intérêts opérée par le premier module consiste à sélectionner, à un instant donné, les P points d'intérêts ayant un score de détection le plus élevé ou un score de détection le moins élevé ou à sélectionner les P points d'intérêts selon un ordre chronologique ou aléatoire.

Selon un aspect particulier de l'invention, le deuxième module comprend au moins une file d'attente configurée pour recevoir les points d'intérêts candidats transmis par le premier module de sélection de points d'intérêts, au moins un organe de contrôle de calcul de descripteurs de points d'intérêts agencé pour coopérer avec au moins une unité de calcul de descripteurs de points d'intérêts, au moins une mémoire bandeau dimensionnée pour sauvegarder les points d'intérêts candidats et leurs descripteurs calculés à une adresse unique et un organe de gestion d'adressage configuré pour générer ladite adresse unique à partir d'au moins l'index unique fourni par le premier module de sélection.

Selon l'invention, chaque bandeau est en outre décomposé en une pluralité de zones de sélection, la sélection de P points d'intérêts étant opérée par zone de sélection.

Selon un aspect particulier de l'invention, ladite adresse unique est générée en outre à partir d'un identifiant de la zone de sélection du point d'intérêt à sauvegarder.

Selon un aspect particulier de l'invention, le second module comprend un organe de contrôle de calcul de descripteurs de points d'intérêts et une file d'attente pour une ou plusieurs zone(s) de sélection.

Selon un aspect particulier de l'invention, au moins une mémoire de voisinage est dimensionnée pour contenir uniquement une zone d'une image nécessaire au calcul des descripteurs pour les points d'intérêts correspondants à K lignes d'une ou plusieurs zones de sélection d'un bandeau.

Selon une variante particulière, le dispositif de calcul selon l'invention comprend en outre un troisième module d'appariement de points d'intérêts détectés et sélectionnés dans une image de référence et une image de test à partir de leurs descripteurs associés sauvegardés respectivement dans un premier ensemble de mémoires bandeaux et un second ensemble de mémoires bandeaux, ledit troisième module d'appariement étant configuré pour accéder en lecture de façon indépendante à l'une quelconque des mémoires bandeaux associées à l'image de référence et à l'image de test.

Selon un aspect particulier de l'invention, le troisième module d'appariement comprend un organe de contrôle d'appariement pour piloter une unité de calcul d'appariement, un ensemble de mémoires bandeaux d'appariement associé à l'image de référence et un ensemble de mémoires bandeaux d'appariement associé à l'image de test, chaque mémoire bandeau d'appariement étant apte à sauvegarder au moins un point d'intérêt et un score d'appariement.

Selon un aspect particulier de l'invention, l'appariement est réalisé dans une zone de recherche spatiale de l'image en comparant chaque point d'intérêt à apparier de l'image de référence sauvegardé dans une mémoire bandeau avec les points d'intérêts de l'image de test situés dans la zone de recherche spatiale centrée sur la position du point d'intérêt à apparier et sauvegardés dans au moins une mémoire bandeau, la recherche d'appariement étant limitée aux mémoires bandeaux de l'image de test correspondants à des bandeaux de l'image de test qui ont une intersection non vide avec la zone de recherche spatiale.

Selon un aspect particulier de l'invention, l'image de référence et l'image de test sont des images successives temporellement ou sont des images de la même scène provenant de deux flux d'images différents.

D'autres caractéristiques et avantages de la présente invention apparaîtront mieux à la lecture de la description qui suit en relation aux dessins annexés qui représentent :
- La figure 1, un schéma fonctionnel d'un dispositif, selon l'art antérieur, mettant en oeuvre des fonctions de détection, description et appariement de points d'intérêts,
- La figure 2, un synoptique de l'architecture d'un dispositif de calcul selon l'invention,

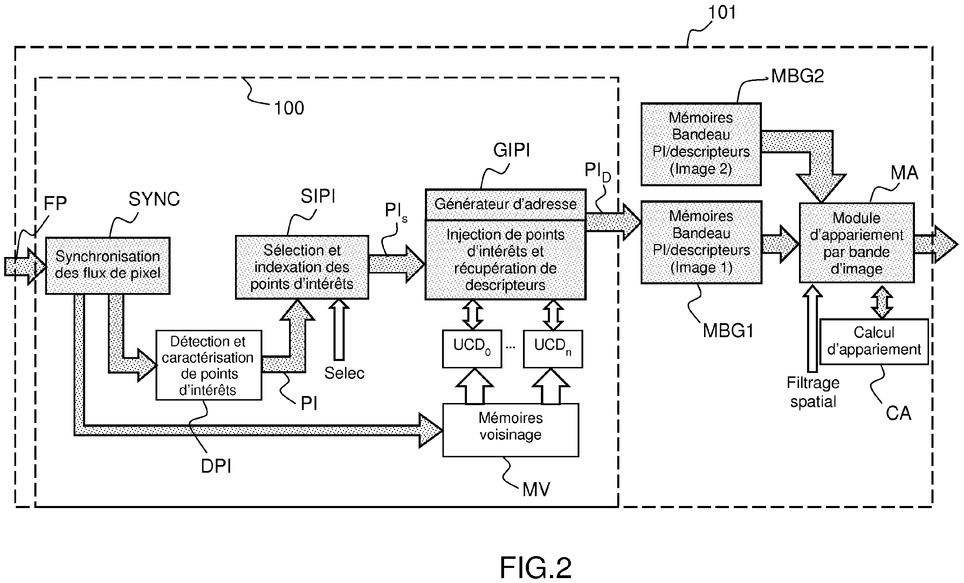

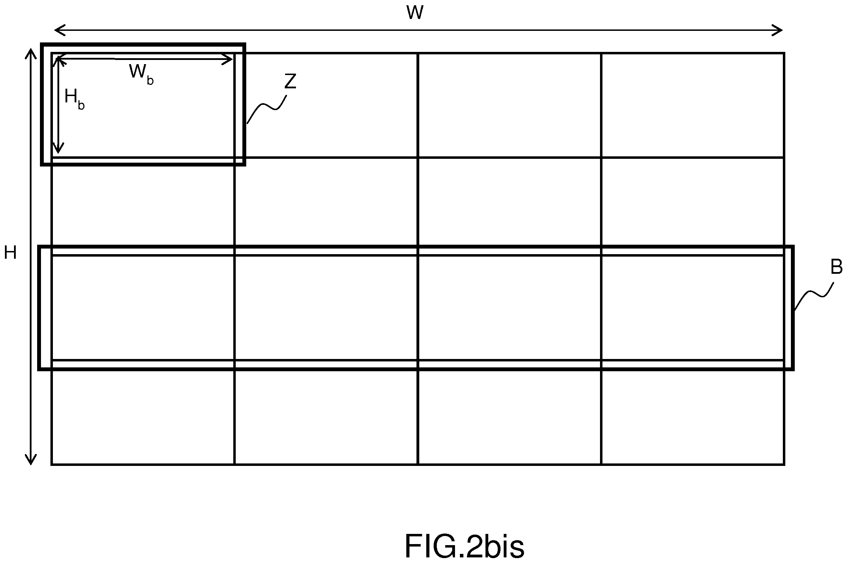

- La figure 2bis, un schéma illustrant un découpage particulier d'une image en vue de son traitement par le dispositif de calcul selon l'invention,

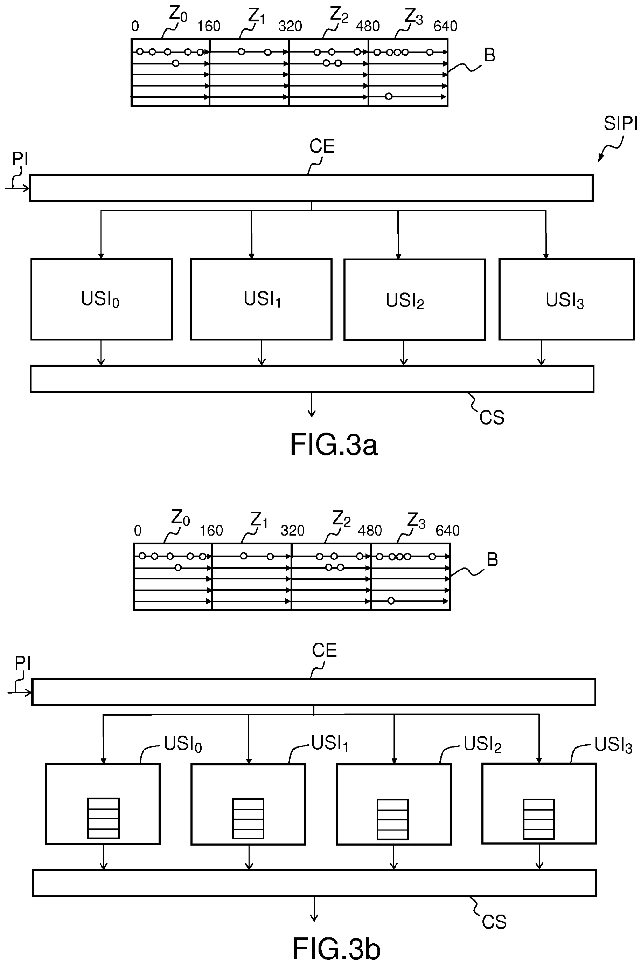

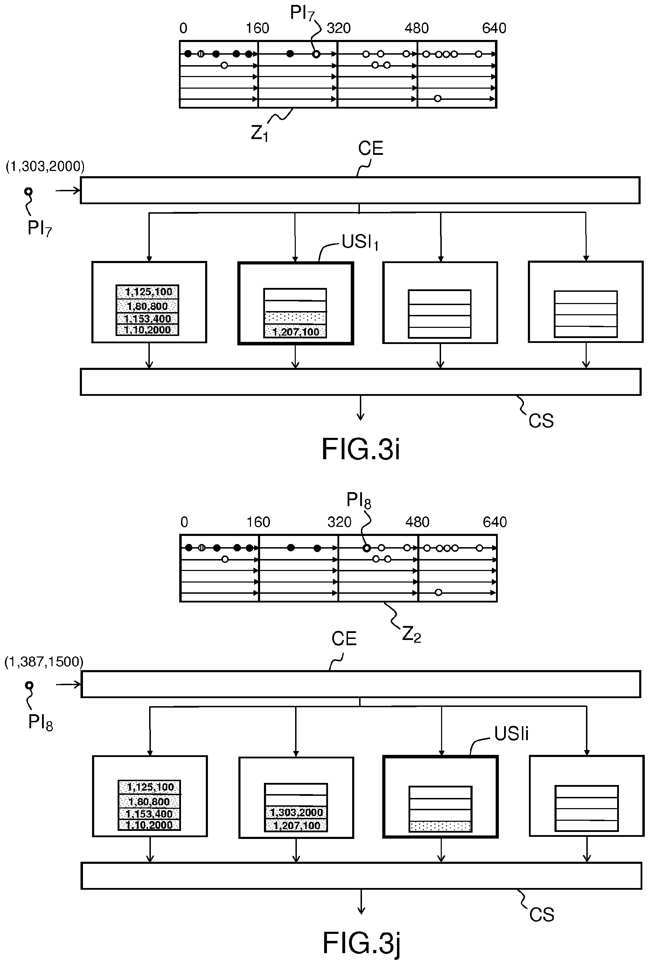

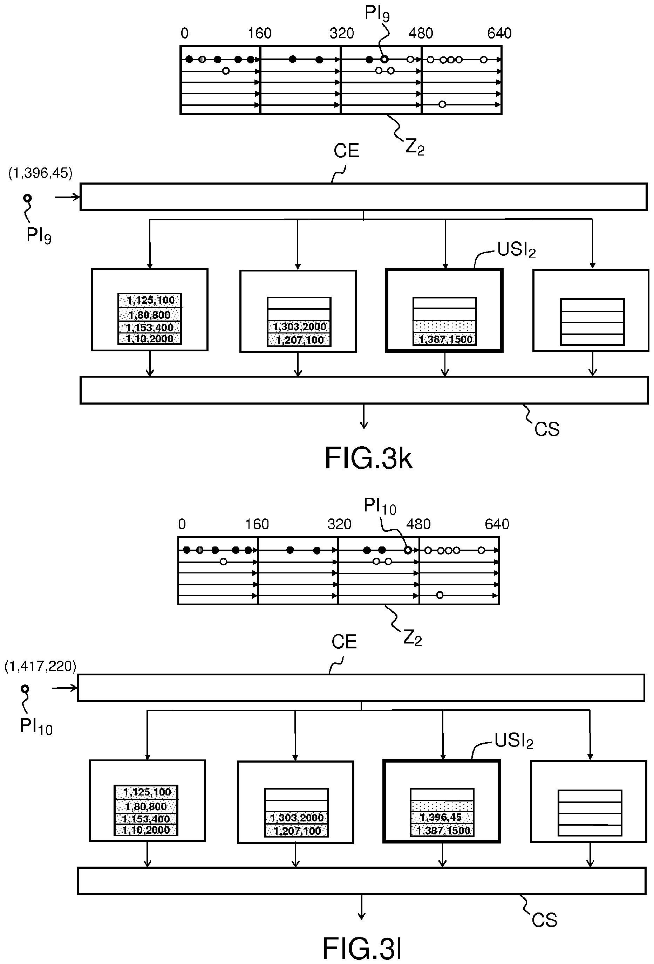

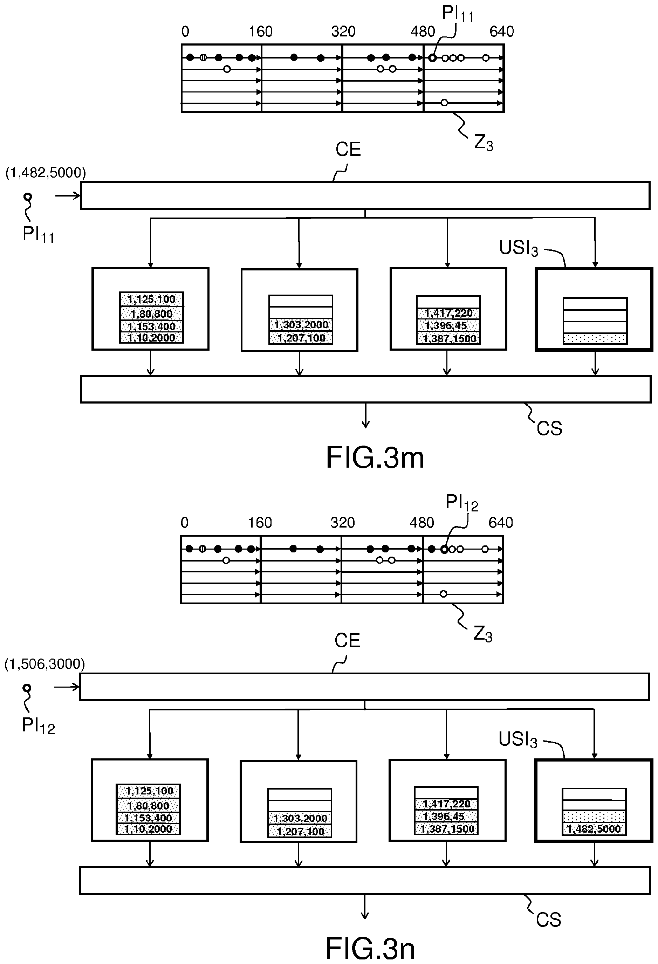

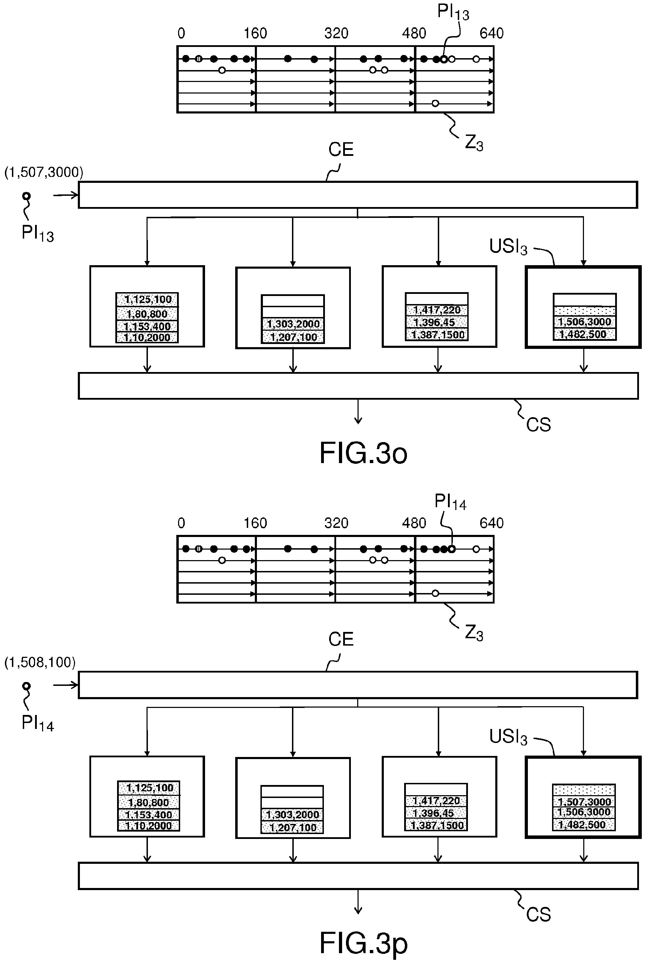

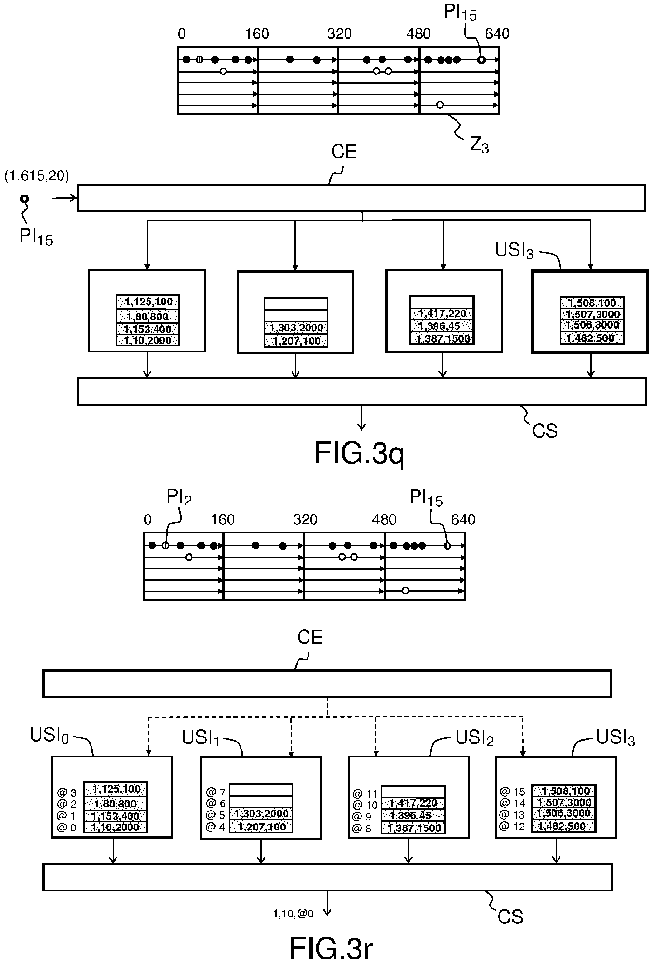

- Les figures 3a-3x, plusieurs schémas décrivant l'architecture d'un premier module de sélection et indexation de points d'intérêts appartenant au dispositif selon l'invention,

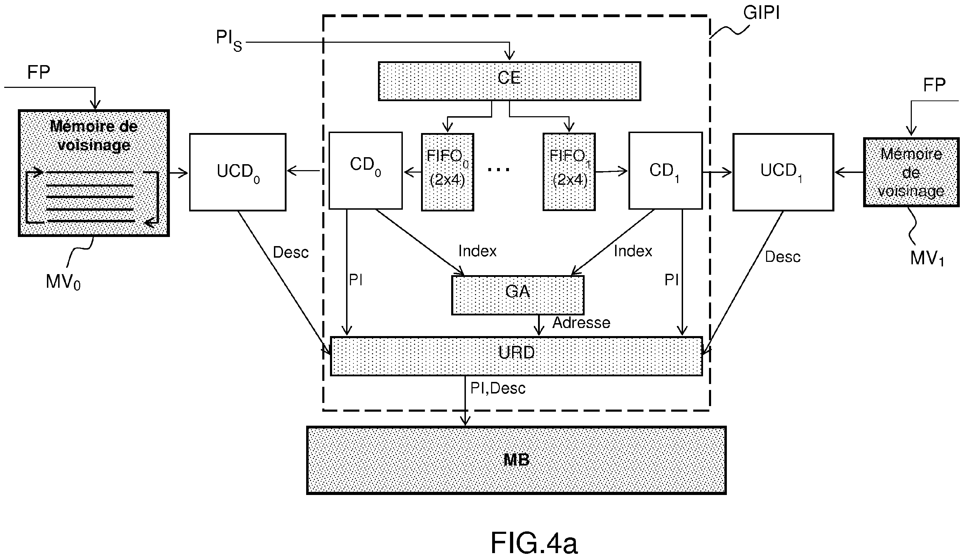

- Les figures 4a-4g, plusieurs schémas décrivant l'architecture d'un deuxième module relatif à la description de points d'intérêts, appartenant au dispositif selon l'invention,

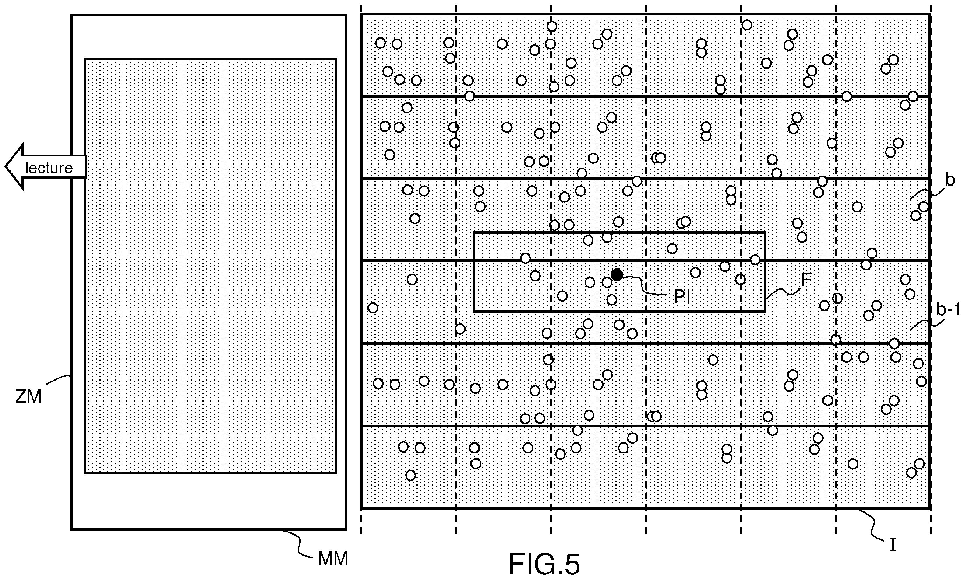

- la figure 5, un schéma illustrant un mécanisme d'appariement de points d'intérêts tel que mis en oeuvre par une solution de l'art antérieur,

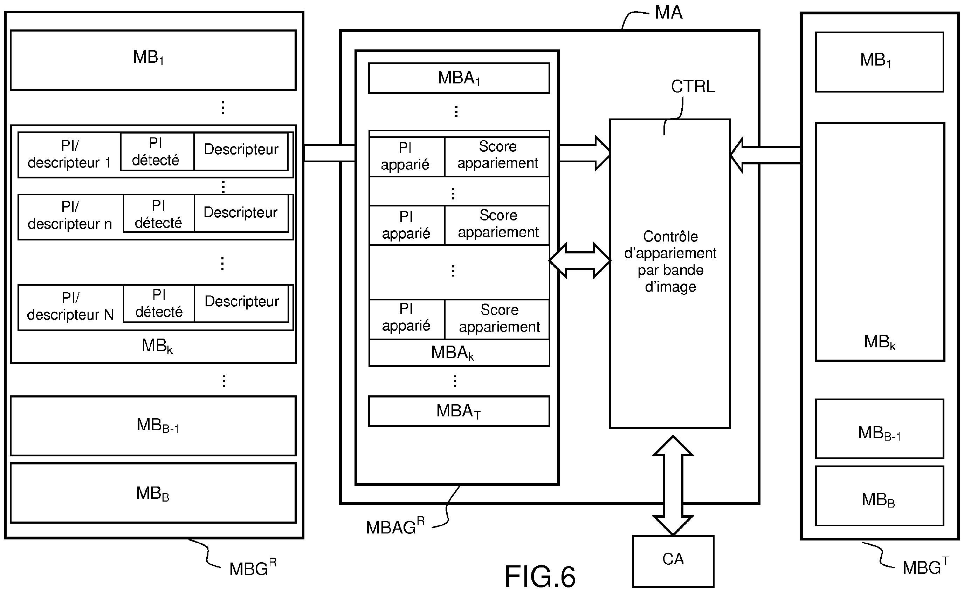

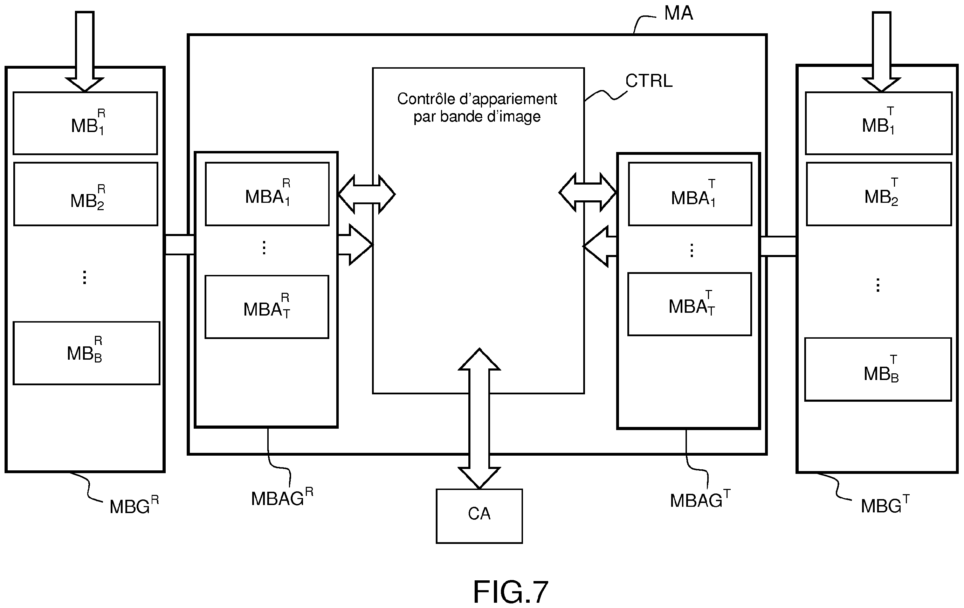

- Les figures 6 et 7 deux schémas décrivant le fonctionnement du module d'appariement par bande d'image selon un second mode de réalisation de l'invention,

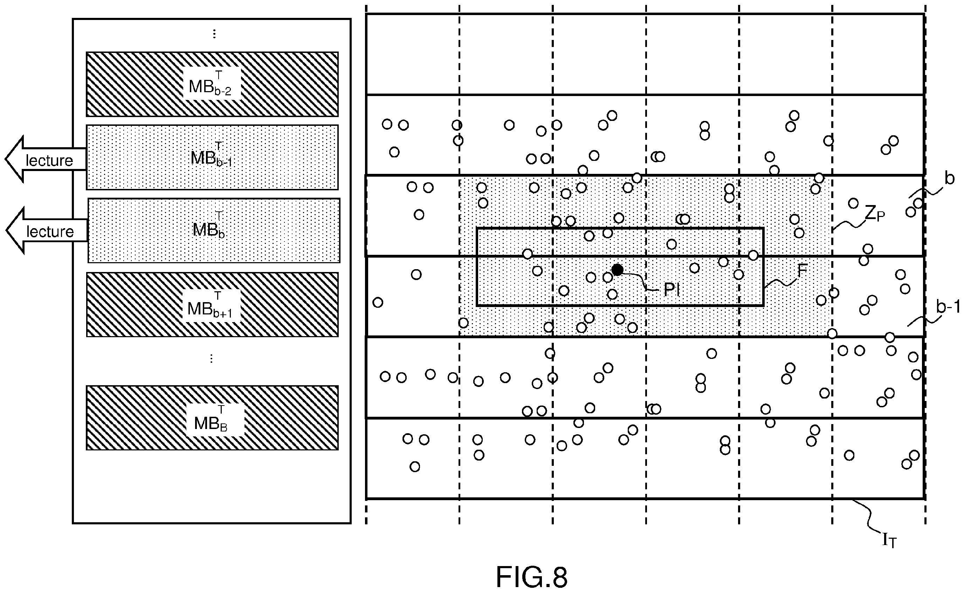

- La figure 8, un schéma illustrant un mécanisme d'appariement de points d'intérêts mis en oeuvre par le dispositif selon le second mode de réalisation de l'invention.

La figure 2 représente un synoptique de l'architecture d'un dispositif de calcul selon un premier mode de réalisation 100 de l'invention et un second mode de réalisation 101 de l'invention.

Dans le premier mode de réalisation, le dispositif 100 comprend principalement :
- un premier module de synchronisation SYNC d'un flux de pixels FP entrant, les pixels appartenant aux images d'une séquence d'images,
- un deuxième module SIPI de sélection et indexation de points d'intérêts parmi un ensemble de points d'intérêts PI détectés et caractérisés au sein d'une image appartenant au flux d'images FP,
- un troisième module GIPI de gestion du calcul de descripteurs des points d'intérêts sélectionnés PI_{S}, exécutant les fonctions de génération d'adresse, d'injection de points d'intérêts et de récupération de descripteurs.

En outre, le premier module SYNC de synchronisation et le deuxième module SIPI de sélection et indexation de points d'intérêts interagissent avec un module DPI de détection et caractérisation de points d'intérêts au sein du flux de pixels FP.

Le troisième module GIPI interagit avec plusieurs unités de calculs de descripteurs UCD₀,...UCDₙ elles-mêmes connectées à une ou plusieurs mémoire(s) de voisinage MV d'un point d'intérêt. Une mémoire de voisinage MV est alimentée par le flux de pixels FP éventuellement synchronisé temporellement par le premier module SYNC.

Dans le second mode de réalisation, le dispositif 101 comprend en outre un quatrième module MA d'appariement par bande d'image et au moins deux mémoires bandeau points d'intérêts/descripteurs MBG1,MBG2 auquel le quatrième module MA est relié.

Les mémoires bandeau points d'intérêts/descripteurs MBG1,MBG2 sont alimentées par les points d'intérêts décrits PI_{D} fournis en sortie du troisième module GIPI.

Le quatrième module MA d'appariement interagit avec un module de calcul d'appariement CA de points d'intérêts.

On décrit tout d'abord le fonctionnement général de l'architecture divulguée à la figure 2. Un flux de pixels FP comprenant une succession de pixels appartenant à plusieurs images issues, par exemple, d'un flux vidéo, est reçu en temps réel par un module de synchronisation SYNC. Ce module SYNC a pour rôle la synchronisation temporelle du flux de pixels FP en fonction du temps de traitement induit par les différents modules de l'architecture. Autrement dit, le module de synchronisation SYNC introduit un ou plusieurs retards, via par exemple des lignes à retard, des buffers ou toute autre implémentation équivalente, au flux de pixels entrant. Le retard appliqué peut être différent pour le flux de pixels transmis au module de détection et caractérisation de points d'intérêts DPI et pour le flux de pixels transmis à une mémoire de voisinage MV.

Les retards éventuels appliqués sont déterminés en fonction de la connaissance a priori des temps de traitements induits par chaque module du dispositif 100,101 selon l'invention. Les retards déterminés sont valables pour une application donnée et pour un paramétrage donné de l'architecture.

Le but recherché par l'introduction du module de synchronisation SYNC est de permettre une synchronisation entre le flux de pixels alimentant la mémoire de voisinage MV et les calculs réalisés à partir des pixels contenus dans cette mémoire de voisinage. Cette fonctionnalité sera d'avantage explicitée dans la suite de la description des modules du dispositif 100,101 selon l'invention.

Le flux de pixels synchronisé est ensuite transmis à un module DPI de détection et caractérisation de points d'intérêts PI qui a pour fonction la détection, au sein d'une image, de points d'intérêts et leur caractérisation par leur position dans l'image et par au moins un score de détection. Le module DPI exécute à cet effet l'un quelconque des algorithmes de détection et caractérisation de points d'intérêts connus du domaine, parmi lesquels les algorithmes précédemment cités SURF, SIFT ou encore un algorithme de détection de Harris. Tout autre algorithme permettant la détection et la caractérisation de points d'intérêts ou points remarquables dans une image peut être exécuté par le module DPI. La caractérisation des points d'intérêts peut également inclure un ou plusieurs autres paramètres de caractérisation (typiquement l'orientation et le facteur d'échelle).

Par la suite, lorsqu'on évoquera la transmission ou la réception, par un module, de points d'intérêts, le lecteur comprendra qu'il s'agit de la transmission ou de la réception des coordonnées des points d'intérêts dans l'image ainsi que d'informations permettant de les caractériser, ces informations comprenant au minimum un score de détection.

Les points d'intérêts PI détectés et caractérisés par leur position dans l'image et leur score de détection sont ensuite fournis, au rythme de réception des pixels de l'image, éventuellement retardés par le module de synchronisation SYNC, à un module SIPI de sélection et indexation de points d'intérêts. Le module SIPI de sélection de points d'intérêts reçoit la liste des points d'intérêts PI détectés dans une image et a pour fonction la sélection, de façon spéculative, et l'indexation d'un sous-ensemble de points d'intérêts. Ce module SIPI est paramétré par un paramètre Selec qui spécifie le type de méthode de sélection utilisé, ce type pouvant être plural.

Le module GIPI suivant reçoit les points d'intérêts sélectionnés PIₛ avec leur index unique déterminé par le module SIPI. Ce module GIPI est d'une part en charge de communiquer avec une ou plusieurs unités de calcul de descripteurs UCD₀,...UCDₙ qui sont en charge du calcul de descripteurs pour tous les points d'intérêts sélectionnés de façon spéculative. D'autre part, le module GIPI a également pour fonction de générer une adresse pour chaque descripteur calculé en vue de son stockage dans une mémoire bandeau de points d'intérêts/descripteurs MB1.

Les unités de calcul de descripteurs UCD₀,...UCDₙ sont interfacées avec une ou plusieurs mémoire(s) de voisinage MV dont le contenu correspond à un voisinage du point d'intérêt dont on cherche à calculer un descripteur. Une mémoire de voisinage MV est alimentée par le module de synchronisation SYNC de sorte à permettre une synchronisation permanente du contenu de la mémoire de voisinage MV avec le calcul de descripteur du point d'intérêt courant.

L'algorithme implémenté par les unités de calcul de descripteurs UCD₀,...UCDₙ peut être n'importe quel algorithme de calcul de descripteur d'un point d'intérêt, par exemple l'algorithme SURF ou SIFT.

Dans le second mode de réalisation, le dispositif 101 selon l'invention comprend également un module d'appariement MA connecté à au moins deux mémoires bandeau MBG₁,MBG₂ associées à deux images distinctes. Les mémoires bandeau MBG₁,MBG₂ contiennent des informations associées aux points d'intérêts et à leurs descripteurs au sein d'un bandeau d'une image. Pour cela, et comme cela sera explicité par la suite, une image est décomposée en plusieurs bandeaux horizontaux. Les mémoires bandeau MBG₁,MBG₂ contiennent les points d'intérêts décrits pour un bandeau de l'image.

Le module d'appariement MA est connecté à un module de calcul d'appariement CA qui réalise un calcul de score d'appariement pour identifier, dans les deux images, les points d'intérêts qui sont les plus proches entre eux. Là encore, l'algorithme utilisé pour calculer un score d'appariement peut être n'importe quel algorithme connu du domaine (par exemple une distance minimale selon la norme L1 sur les descripteurs).

Le module d'appariement MA est paramétré par un paramètre de filtrage spatial et a pour rôle de gérer l'accès en lecture et en écriture, pour le module de calcul CA, aux différentes mémoires bandeaux utilisées.

Les deux images utilisées pour le calcul des scores d'appariement peuvent être deux images appartenant au même flux d'images, par exemple une image reçue à un instant t et une image reçue à un instant t+1 ou t+k avec k un entier supérieur à 1. Les deux images peuvent également provenir de deux flux distincts, par exemple deux flux correspondants à des points de vue différents de la même scène. Dans ce second cas, l'architecture décrite à la figure 1 est dupliquée pour chaque image à l'exception du module d'appariement MA qui est commun aux deux chaînes de traitement des deux images.

Les différents modules de calcul et mémoires utilisés par l'invention seront détaillés par la suite. Le principe général de l'invention consiste à traiter l'image reçue par bandeaux en effectuant une sélection des points d'intérêts et un calcul des descripteurs selon une approche spéculative qui permet d'accélérer l'enchainement des calculs et de minimiser les besoins en mémorisation dans la chaine globale de traitement d'une image.

La figure 2bis représente schématiquement une image I, appartenant à un flux d'image FP. L'image I peut être décomposée en bandeaux B comprenant tous les pixels d'une ou plusieurs lignes consécutives de l'image I. Chaque bandeau B peut être décomposé en plusieurs zones de sélection Z de même tailles ou non. La décomposition de l'image I illustrée sur la figure 2bis constitue un quadrillage qui est utilisé par l'invention, tel que cela sera explicité par la suite, pour accélérer les traitements réalisés sur l'image I en vue de réaliser un appariement de points d'intérêts.

On décrit à présent, à l'appui des figures 3a-3x, le fonctionnement détaillé du premier module de sélection et indexation SIPI de points d'intérêts selon l'invention.

La figure 3a décrit un exemple de réalisation du module SIPI de sélection et indexation de points d'intérêts qui comprend principalement un contrôleur d'entrée CE, un contrôleur de sortie CS et plusieurs unités de sélection et d'indexation de points d'intérêts USI₀, USI₁, USI₂, USI₃. Chaque unité de sélection et indexation USI₀, USI₁, USI₂, USI₃ comporte au moins une mémoire ou un registre pour sauvegarder au moins P points d'intérêts ainsi qu'une unité de contrôle pour mettre en oeuvre une méthode de sélection de points d'intérêts. Sur la partie haute de la figure 3a est illustré schématiquement un bandeau B comprenant plusieurs lignes d'une image I à traiter comprenant 640 colonnes. Le bandeau B est en outre décomposé en quatre zones de sélection Z₀,Z₁,Z₂,Z₃ comprenant chacune 160 colonnes. Le premier module SIPI de sélection et indexation de points d'intérêts est configuré pour sélectionner au plus un nombre de points d'intérêts P identique pour chaque zone de sélection d'un bandeau. Dans l'exemple de la figure 3a, P est égal à quatre. L'exemple décrit n'est pas limitatif, en particulier le nombre de zones de sélection dans un bandeau peut être différent. Les zones de sélection peuvent être de tailles identiques ou non. En particulier, le nombre de colonnes d'une image n'est pas forcément égal à un multiple du nombre de zones de sélection. Le nombre de zones de sélection dans un bandeau détermine le nombre d'unités de sélection et d'indexation, sachant qu'il y a une unité par zone de sélection.

Le module SIPI selon l'invention est ainsi paramétré d'une part par le nombre d'unités de sélection et d'indexation qu'il contient en relation avec le nombre de zones de sélection par bandeau et d'autre part par le nombre P de points d'intérêts sélectionnés au plus par zone de sélection. Ces deux paramètres sont déterminés en fonction des contraintes de l'application visée. Comme cela sera explicité par la suite, le nombre P de points d'intérêt sélectionné par zone de sélection ainsi que le nombre de zones de sélection par bandeau a une influence sur les performances finales de la fonction d'appariement et sur les performances globales d'exécution du système, notamment la latence.

Les figures 3b à 3x illustrent pour cet exemple de réalisation, étape par étape, le fonctionnement du module de sélection et indexation de points d'intérêts SIPI selon l'invention pour un exemple non limitatif de points d'intérêts détectés reçus par ce module et identifiés dans le bandeau B par leur position dans l'image.

Le fonctionnement est décrit pour un bandeau B d'une image I et est identique pour chaque bandeau d'une image, les bandeaux étant parcourus dans l'ordre d'arrivée des pixels correspondants de l'image.

En outre, les figures 3b à 3x décrivent un exemple de réalisation utilisant une méthode particulière de sélection de points d'intérêts. Cette méthode particulière consiste à sélectionner, dans chaque zone de sélection, les P points d'intérêts présentant le score de détection le plus élevé. L'invention ne se limite pas à la méthode de sélection décrite et peut être élargie à tout type de méthode de sélection permettant de sélectionner un nombre réduit P de points d'intérêts au sein d'une zone de sélection comportant un nombre supérieur à P de points d'intérêts, le critère de sélection pouvant différer et consistant en un paramètre du module SIPI. En particulier la méthode de sélection peut consister à sélectionner au contraire les P points d'intérêt présentant le score de détection le moins élevé. Elle peut également consister à sélectionner les P points d'intérêts selon un critère aléatoire ou selon un ordre chronologique. Les exemples décrits ne sont pas limitatifs et toute sélection de P points d'intérêts parmi une distribution d'un plus grand nombre de points et selon un critère prédéterminé est compatible de l'invention.

La figure 3b illustre la réception par le contrôleur d'entrée CE d'un point d'intérêt Pl préalablement détecté et caractérisé par le dispositif de détection DPI. Précisément, le contrôleur d'entrée CE reçoit au moins les coordonnées du point d'intérêt dans l'image ainsi que son score de détection. Le score de détection est une valeur numérique variable dans une plage de variation donnée qui dépend de l'algorithme de détection utilisé. Le score de détection est proportionnel à la probabilité qu'un pixel de l'image corresponde à un point d'intérêt. Le score de détection correspond par exemple, à un degré de saillance. La comparaison du score de détection à un seuil de détection permet de discriminer les points d'intérêts parmi l'ensemble des pixels de l'image. Pour rappel, les points d'intérêts sont des points remarquables de l'image qui se retrouvent d'une image à l'autre au sein d'une séquence temporelle. L'identification de ces points permet, par exemple, le suivi d'objet dans une séquence d'images.

Les points d'intérêts sont reçus par le contrôleur d'entrée dans leur ordre d'apparition dans un bandeau d'image B parcouru ligne par ligne. Dans l'exemple de la figure 3b, le bandeau B comporte cinq lignes sur lesquelles sont disposés 19 points d'intérêts (15 sur la première ligne, 3 sur la deuxième ligne et 1 sur la cinquième ligne).

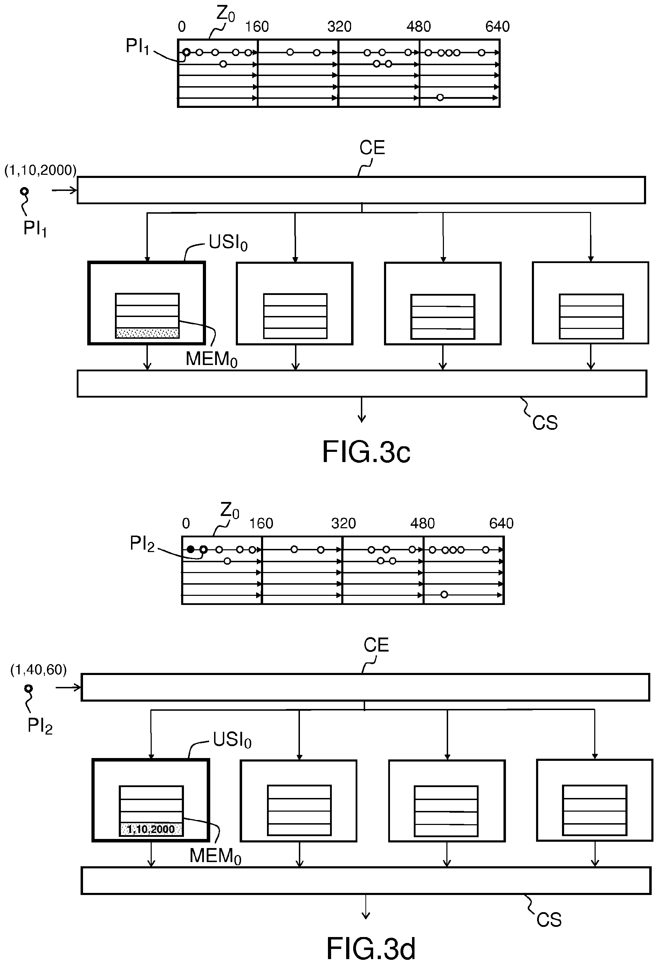

Les figures 3c à 3q illustrent la réception successive des 15 points d'intérêts correspondants à des pixels de la première ligne du bandeau B.

Sur la figure 3c, le premier point d'intérêt PI₁, est d'une part représenté dans le bandeau B et dans la zone de sélection Z₀ par sa position et d'autre part par le triplet {1,10,2000} qui correspond à ses coordonnées dans l'image (1^{ère} ligne, 10^{ème} colonne) et son score de détection (2000). Le premier point d'intérêt est identifié (par ses coordonnées) comme appartenant à la première zone Z₀ de sélection du bandeau B. Il est transmis à l'unité de sélection USI₀ associée à la première zone Z₀ de sélection pour être sauvegardé dans sa mémoire locale MEM₀.

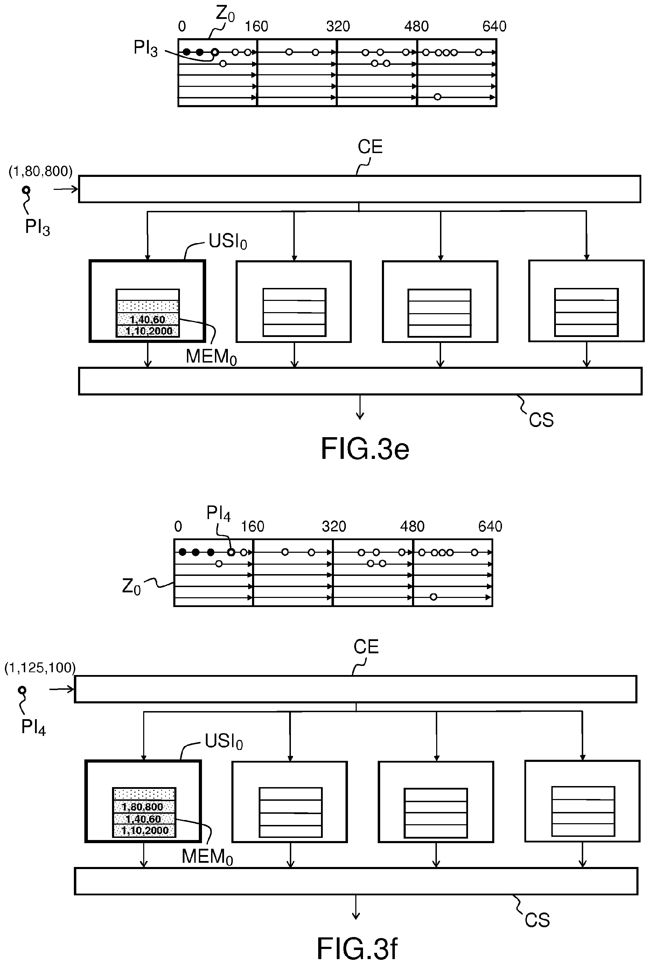

Les figures 3d, 3e et 3f montrent la réception des points d'intérêts PI₂,PI₃,PI₄ situés également dans la première zone de sélection Z₀ du bandeau B et leur placement dans la mémoire MEM₀ de la première unité de sélection USI₀.

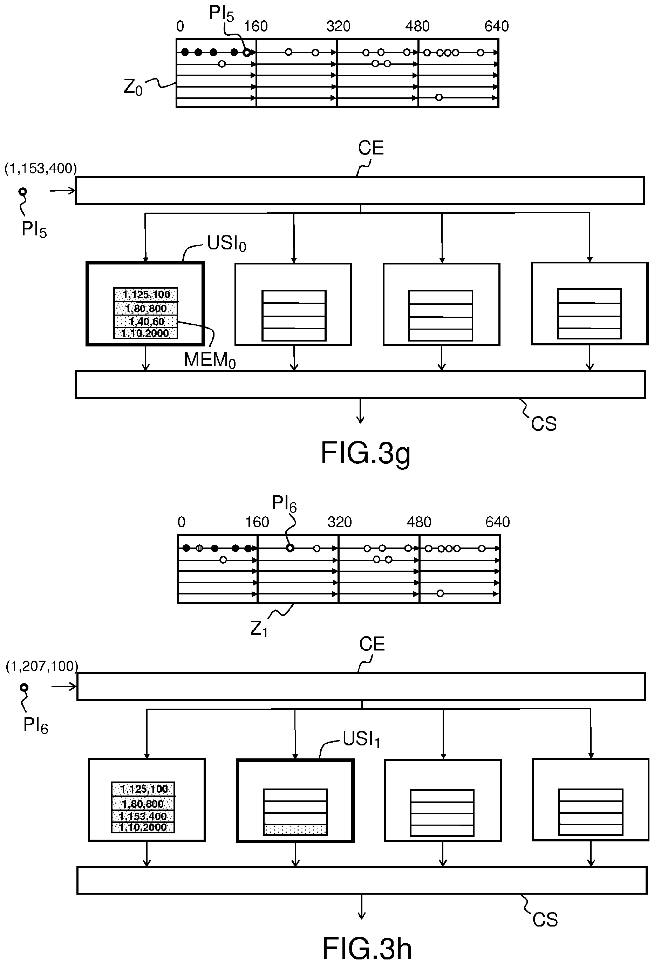

La figure 3g illustre un cas de figure dans lequel un cinquième point d'intérêt PI₅ appartenant à la même zone de sélection Z₀ est reçu alors que le nombre maximum de points d'intérêts sauvegardés par unité de sélection est égal à quatre. Dans ce cas l'unité de sélection USI₀ opère une comparaison entre le score de détection du cinquième point d'intérêt PI₅ et les scores de détection des points d'intérêts déjà sauvegardés en mémoire. Comme explicité ci-dessus, un exemple de règle de sélection peut consister à sélectionner les P points d'intérêts ayant les scores de détection les plus élevés. La règle implémentée par une unité de sélection USI₀, USI₁, USI₂, USI₃ est alors la suivante. Si le score de détection du nouveau point d'intérêt reçu est supérieur au score de détection d'au moins un des points d'intérêts sauvegardés dans la mémoire locale, alors le point d'intérêt sauvegardé qui possède le score de détection le plus faible est remplacé par le nouveau point d'intérêt reçu. Dans le cas contraire, le nouveau point d'intérêt reçu n'est pas sauvegardé et est donc éliminé des points d'intérêts sélectionnés. Les points d'intérêts sélectionnés temporairement sont appelés points d'intérêts candidats. Ils peuvent être différents des points d'intérêts sélectionnés in fine à l'issu du traitement de toute une zone de sélection et appelés points d'intérêts retenus.

Ainsi, sur la figure 3h on voit que le point d'intérêt {1,40,60} a été remplacé dans la mémoire MEM₀ par le point d'intérêt {1,153,400}.

Le mécanisme de remplissage des mémoires locales des unités de sélection et d'indexation USI₀, USI₁, USI₂, USI₃ se poursuit de la façon illustrée aux figures 3h à 3q jusqu'à la fin du traitement de la première ligne du bandeau B.

La figure 3r montre le fonctionnement du dispositif de sélection et indexation SIPI à la fin du traitement d'une ligne d'un bandeau d'image. A l'issue des traitements décrits précédemment, sur les 15 points d'intérêts que comporte la première ligne du bandeau B, deux points d'intérêts PI₂ et PI₁₅ n'ont pas été sélectionnés et 13 points d'intérêts candidats ont été sauvegardés. Ces derniers sont alors extraits des mémoires de chaque unité de sélection par le contrôleur de sortie avec un index unique compris entre 0 et P-1 puis sont transmis au module de calcul de descripteurs CD. Ainsi un point d'intérêt est entièrement identifié dans un bandeau par cet index et le numéro de la zone de sélection.

Dans l'exemple illustré, la transmission des points d'intérêts sélectionnés au module suivant se fait à la fin du traitement de chaque nouvelle ligne. Plus généralement, cette transmission peut être effectuée à la fin du traitement de K lignes, avec K un paramètre égal à un nombre entier supérieur ou égal à 1 et strictement inférieur au nombre de lignes par bandeau.

Sur la figure 3r, les index @0 à @15 sont représentés sur la gauche des emplacements mémoires où sont stockés les points d'intérêts candidats dans chaque unité de sélection et indexation.

Ces index constituent une caractéristique essentielle de l'invention car ils permettent d'effectuer une sélection spéculative des points d'intérêts. En effet, à la fin du traitement d'une ou K lignes, les points d'intérêts candidats sont transmis au module suivant dans la chaine de traitement alors même que la zone de sélection n'a pas été parcourue entièrement.

Ainsi, les points d'intérêts candidats constituent des informations intermédiaires qui peuvent être remises en cause à chaque nouvelle transmission. L'index généré par le module SIPI pour chaque point d'intérêt candidat est unique et permet d'informer le module GIPI suivant dans la chaine de traitement de la validité d'un point d'intérêt candidat. Plus précisément, un point d'intérêt candidat remplace un autre point d'intérêt candidat précédemment transmis au module GIPI s'il appartient à la même zone de sélection et qu'il est de même index.

L'utilisation d'une approche spéculative a pour avantage de permettre une anticipation des traitements puisque des données sont transmises au module suivant avant que l'ensemble des points d'intérêts d'une image ne soit traité. Cette approche diffère des techniques habituelles qui consistent à faire traiter à chaque module l'ensemble des points d'intérêts d'une image. L'anticipation des traitements induite par l'approche spéculative permet avantageusement de minimiser le besoin en mémoire nécessaire au calcul des descripteurs.

Lorsqu'un bandeau entier est traité, la liste des points d'intérêts candidats est remise à zéro dans les mémoires des unités de sélection et d'indexation USI₀, USI₁, USI₂, USI₃.

L'envoi des nouveaux points d'intérêts sélectionnés toutes les K lignes permet de décrire au plus tôt les meilleurs points d'intérêts candidats tout en ne calculant pas tous les candidats possibles. L'aspect spéculatif de l'architecture permet de garantir un compromis intéressant entre latence de traitement, besoin en mémorisation et efficacité. L'utilisation d'un index unique permet de trier les points d'intérêts sans nécessité de sauvegarder tous les points d'intérêts détectés dans une image. Elle permet également d'éviter l'attente du tri de tous les points d'intérêts d'une zone de sélection avant l'envoi d'informations au module suivant.

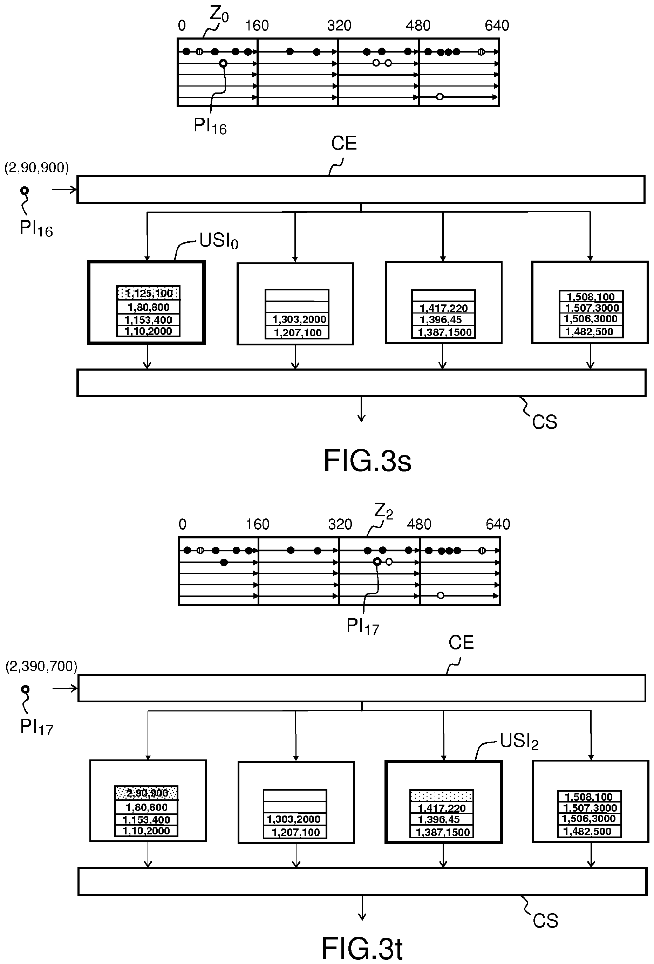

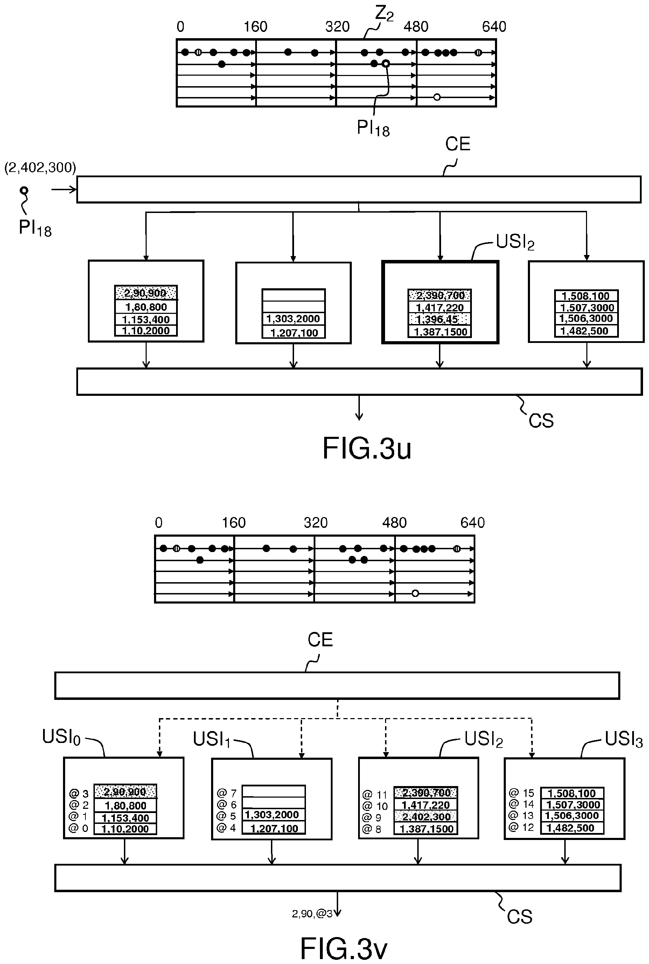

Les figures 3s,3t,3u illustrent le traitement de la deuxième ligne du bandeau B qui contient trois points d'intérêts PI₁₆,PI₁₇,PI₁₈. Le point d'intérêt PI₁₆ est sélectionné et vient remplacer un point d'intérêt candidat précédemment sélectionné dans la 1^{ère} ligne de la première zone de sélection Z₀ (figure 3s). Le point d'intérêt PI₁₇ est sélectionné et sauvegardé dans l'emplacement mémoire encore libre de la troisième unité de sélection USI₂ (figure 3t). Le point d'intérêt PI₁₈ est sélectionné et vient remplacer un point d'intérêt précédemment sélectionné dans la 1^{ère} ligne de la troisième zone de sélection Z₂ (figure 3u).

A la fin du traitement de la deuxième ligne (figure 3v), seuls les nouveaux points d'intérêts candidats sont transmis au module GIPI de gestion en charge du calcul des descripteurs. Dans le cas de la figure 3v, les trois points d'intérêts candidats associés aux index @3, @9 et @11 sont transmis.

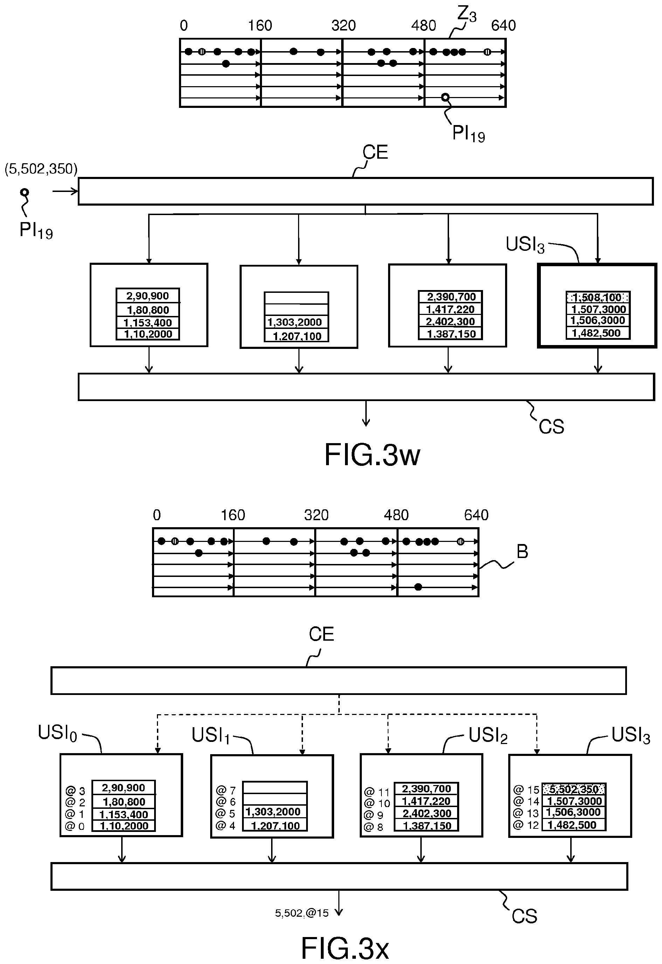

La figure 3w montre le traitement de la dernière ligne du bandeau B qui comprend un seul point d'intérêt PI₁₉ situé dans la dernière zone de sélection Z₃ qui est sauvegardé dans la mémoire de l'unité de sélection USI₃ du fait de son score de détection plus élevé que l'un des points d'intérêts présent en mémoire.

La figure 3x illustre enfin la transmission du nouveau point d'intérêt candidat, avec son index @15, à l'issue du traitement de la dernière ligne du bandeau B. Les points d'intérêts sélectionnés par les unités de sélection et indexation illustrés sur la figure 3x sont les points d'intérêts finalement retenus pour chaque zone de sélection.

Le module de sélection et indexation de points d'intérêts SIPI selon l'invention permet de réduire le nombre de points d'intérêts à traiter en vue du calcul des descripteurs (qui est complexe) en réalisant une sélection par bandeaux et par zones de façon spéculative. Ainsi, un compromis est trouvé (qui peut être affiné en réglant les paramètres du module SIPI) entre la rapidité d'exécution et de transmission des données au module suivant d'une part et le maintien d'un bon niveau de performances de détection d'autre part.

On décrit à présent, à l'appui des figures 4a-4g, le fonctionnement du module GIPI de calcul de descripteurs de points d'intérêts selon l'invention.

La figure 4a représente schématiquement les éléments principaux du module GIPI en charge de la gestion du calcul de descripteurs selon l'invention. Ce module comprend principalement un contrôleur d'entrée CE chargé de la réception des données provenant du module SIPI de sélection et indexation de points d'intérêts et de la transmission vers une ou plusieurs files d'attente FIFO₀,FIFO₁. Le module GIPI comporte également un ou plusieurs modules de contrôle de descripteurs CD₀, CD₁ associées chacun à une file d'attente FIFO₀,FIFO₁ et qui coopèrent chacun avec une unité de calcul de descripteurs UCD₀, UCD₁ et une mémoire de voisinage MV₀,MV₁. Le module GIPI comporte également une unité de gestion d'adressage GA ainsi qu'une unité de récupération des descripteurs URD en charge de transférer les descripteurs calculés vers une mémoire bandeau MB à l'adresse pourvue par l'unité de gestion d'adressage GA.

Chaque unité de calcul de descripteurs UCD₀, UCD₁ est en charge du calcul de descripteurs pour les points d'intérêts situés dans une zone de calcul du bandeau d'image B. Pour l'exemple de la figure 4a, le bandeau d'image B est décomposé en deux zones de calcul. Le nombre de zones de calcul de descripteurs peut être identique au nombre de zones de sélection Z₀, Z₁, Z₂, Z₃ de points d'intérêts ou peut être différent. La contrainte à respecter est que chaque unité de calcul de descripteur UCD₀,UCD₁ est associée à une ou plusieurs zones de sélection de points d'intérêts autrement dit à une ou plusieurs unités de sélection de points d'intérêts. Le nombre de zones de sélection de points d'intérêts est donc un multiple du nombre d'unités de calcul de descripteur. L'utilisation de plusieurs zones de calcul permet de distribuer les calculs à effectuer sur plusieurs unités de calcul de descripteurs.

A noter également que la mémoire de voisinage peut être unique, chaque unité de calcul de descripteur ayant un accès à un emplacement de cette mémoire ou il peut y avoir une mémoire de voisinage par unité de calcul de descripteur comme représenté sur la figure 4a. Une mémoire de voisinage contient les voisinages de tous les points d'intérêts candidats en cours de traitement par la ou les unités de calcul de descripteur auxquelles elle est rattachée. Le voisinage peut avoir une taille variable en fonction de l'algorithme de calcul de descripteurs ou des paramètres de cet algorithme. Les unités de calcul de descripteur implémentent n'importe quel algorithme de calcul de descripteur d'un point d'intérêt d'une image à partir de ses coordonnées, des paramètres générés par le bloc DPI et d'un voisinage de l'image centré sur ce point d'intérêt.

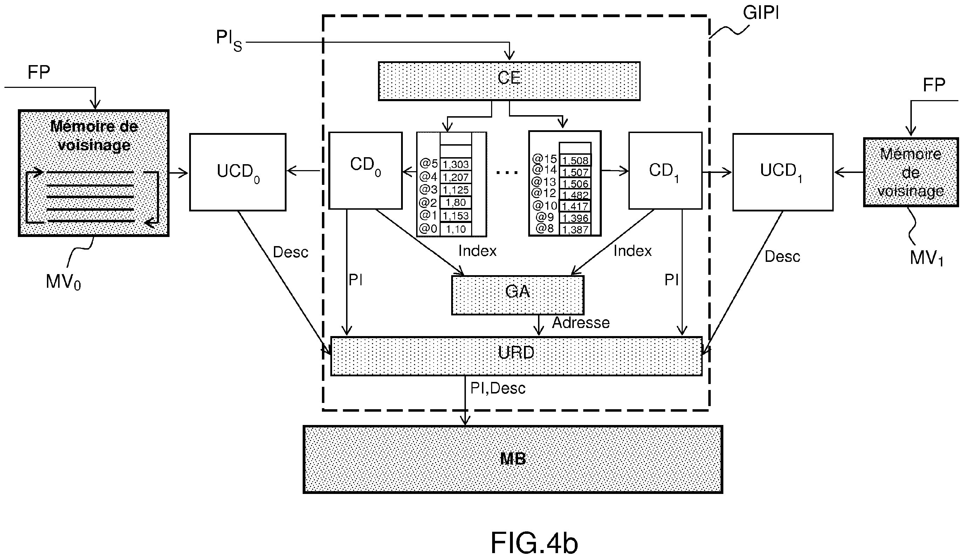

Le fonctionnement du module GIPI est décrit à la figure 4b en combinaison avec la figure 3r. La figure 4b représente l'étape de fonctionnement, dans l'exemple décrit, où les 13 premiers points d'intérêts sélectionnés sur la 1^{ère} ligne du bandeau d'image B sont transmis par le contrôleur de sortie du module de sélection SIPI vers le contrôleur d'entrée CE du module GIPI. Le contenu des mémoires des unités de sélection USI₀, USI₁ , USI₂ , USI₃ est transmis, via le contrôleur d'entrée CE vers les files d'attente FIFO₀,FIFO₁ en fonction de la position du point d'intérêt dans l'image, autrement dit, dans l'exemple décrit, en fonction du positionnement du point d'intérêt dans une des deux zones de calcul considérées. Les files d'attente contiennent, à chaque emplacement mémoire, au moins les coordonnées du point d'intérêt et son index (attribué par l'unité de sélection qui l'a sélectionné). Les files d'attente FIFO₀,FIFO₁ sont dimensionnées pour contenir les informations relatives à M points d'intérêts où M est égal au nombre P maximum de points d'intérêts sélectionnés par zones de sélection de points d'intérêts multiplié par le nombre d'unités de sélection de points d'intérêts associées à une unité de calcul de descripteurs. Dans l'exemple de la figure 4b, les files d'attente peuvent contenir 4x2=8 points d'intérêts.

Lorsqu'au moins un point d'intérêt est disponible dans une file d'attente FIFO₀, l'unité de contrôle du calcul de descripteur CD₀ associée transmet les données contenues dans la file d'attente FIFO₀ et nécessaires au calcul du descripteur (autrement dit au moins les coordonnées du point d'intérêt) vers l'unité de calcul de descripteur UCD₀. Cette unité UCD₀ lit le voisinage associé au point d'intérêt dans la mémoire de voisinage MV₀ puis effectue le calcul du descripteur. Ce calcul particulier est complexe et consommateur en temps de calcul, il nécessite typiquement plusieurs dizaines à centaines de cycles d'horloge. Lorsque le calcul est terminé, l'unité de contrôle du calcul de descripteur CD₀ active un signal de fin indiquant qu'elle est prête à mémoriser le descripteur calculé. Le contenu de la mémoire de voisinage MV₀ est mis à jour directement à partir du flux de pixels FP entrant éventuellement retardé par le module de synchronisation SYNC pour assurer une synchronisation entre le contenu de la mémoire de voisinage et le calcul de descripteur à effectuer sur le point d'intérêt courant. Si les points d'intérêts candidats sélectionnés sont transmis au module GIPI après plusieurs lignes de traitement et non une seule ligne, alors la mémoire de voisinage doit contenir une zone d'image un peu plus importante qui couvre les zones de voisinage correspondant à des points d'intérêts situés potentiellement sur l'une quelconque des lignes de traitement.

A la fin du calcul d'un descripteur, l'unité de récupération de descripteurs URD reçoit le résultat du calcul, ainsi que les informations relatives au point d'intérêt et transfère toutes ces données dans une mémoire bandeau MB. A partir de l'index unique du point d'intérêt, généré par l'unité de sélection et d'indexation SIPI, et de l'identifiant de l'unité de sélection de points d'intérêt dont il provient, une adresse est attribuée au point d'intérêt décrit pour être sauvegardé dans la mémoire bandeau avec son descripteur associé. Cette adresse est générée par le module de gestion d'adressage GA.

Le traitement des données par lignes d'image permet ainsi au module GIPI de démarrer les opérations pour les points d'intérêts sélectionnés sur la première ligne pendant que l'unité de sélection SIPI poursuit le traitement des lignes suivantes. Ainsi, un mécanisme de pipeline est introduit qui permet d'accélérer le traitement global de la chaîne.

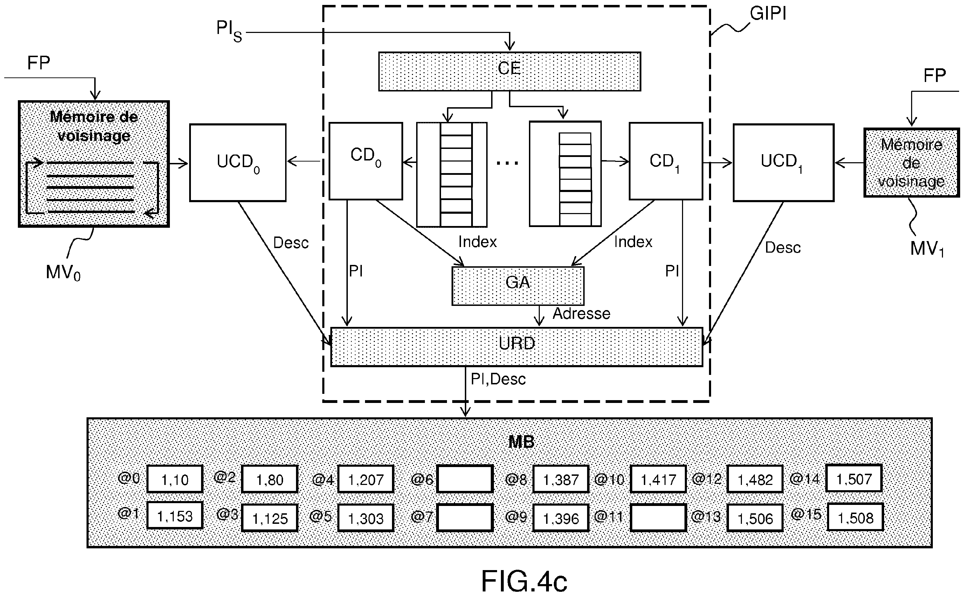

La figure 4c illustre la mise en mémoire bandeau MB des descripteurs calculés pour les points d'intérêts sélectionnés à l'issue du traitement de la 1^{ère} ligne du bandeau B.

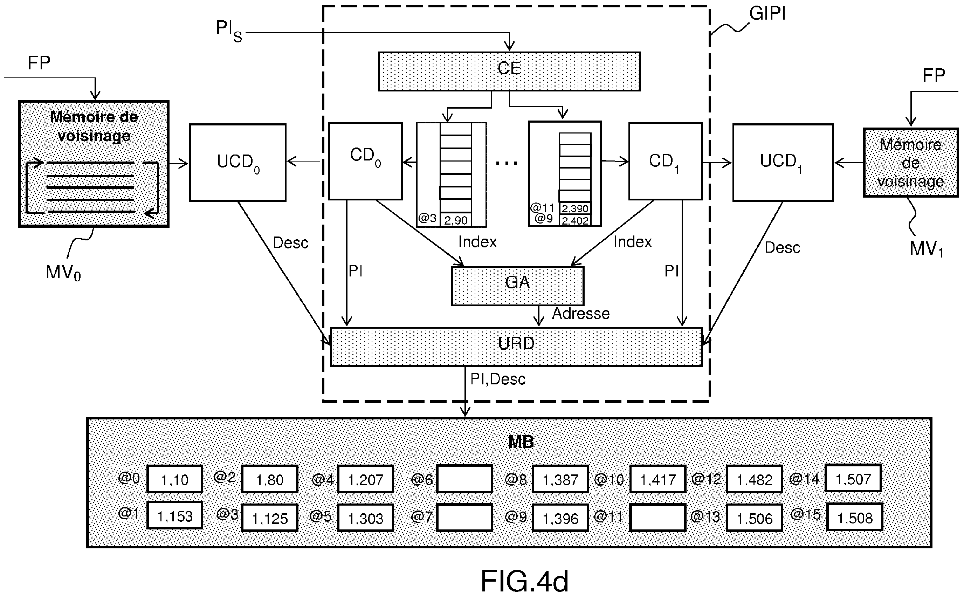

La figure 4d montre le chargement des files d'attente FIFO₀,FIFO₁ avec les trois nouveaux points d'intérêts candidats sélectionnés à l'issue du traitement de la 2^{ème} ligne (cf figure 3v). Ces trois points d'intérêts sont chargés dans les files d'attente avec leurs index, le calcul des descripteurs est ensuite effectué puis le résultat du calcul est chargé dans la mémoire bandeau MB à l'adresse générée à partir de l'index unique du point d'intérêt (cf figure 4d). Ainsi, le point d'intérêt décrit précédemment sauvegardé à cet emplacement est écrasé. Ce mécanisme spéculatif a pour avantage une anticipation des traitements par un fonctionnement en « pipeline ». Cette approche permet la parallélisation des calculs des descripteurs pour respecter la cadence imposée par le flux d'image et la minimisation de la taille mémoire.

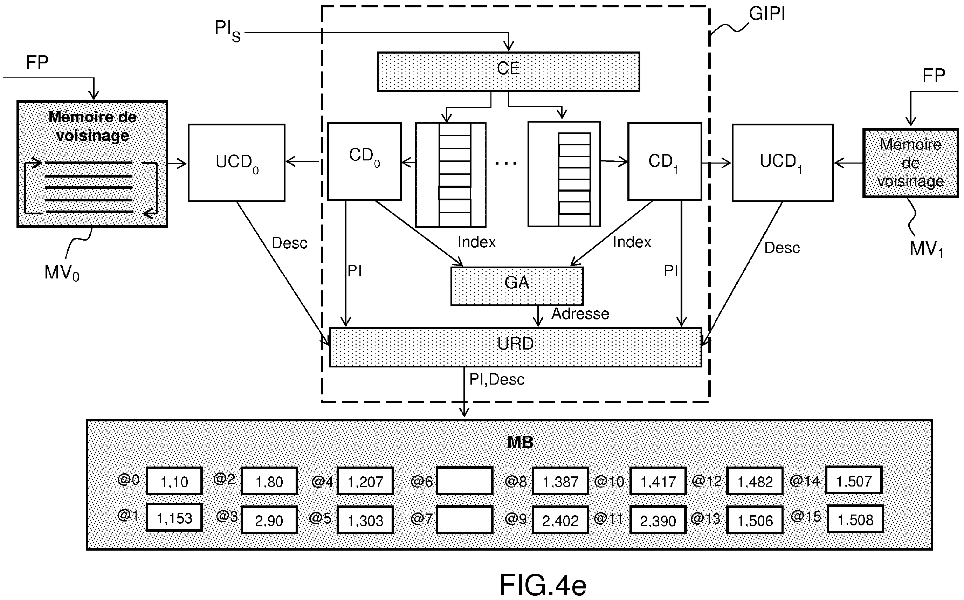

Sur la figure 4e, on peut voir que les emplacements mémoires associés aux index @3, @9 et @11 ont été modifiés. Ainsi, les points d'intérêt détectés sont calculés au plus tôt, limitant l'empreinte mémoire due à la sauvegarde des voisinages nécessaire au calcul des descripteurs, quitte à remettre en cause les données calculées lors du calcul des lignes suivantes. C'est le principe de spéculation sur lequel repose l'architecture selon l'invention.

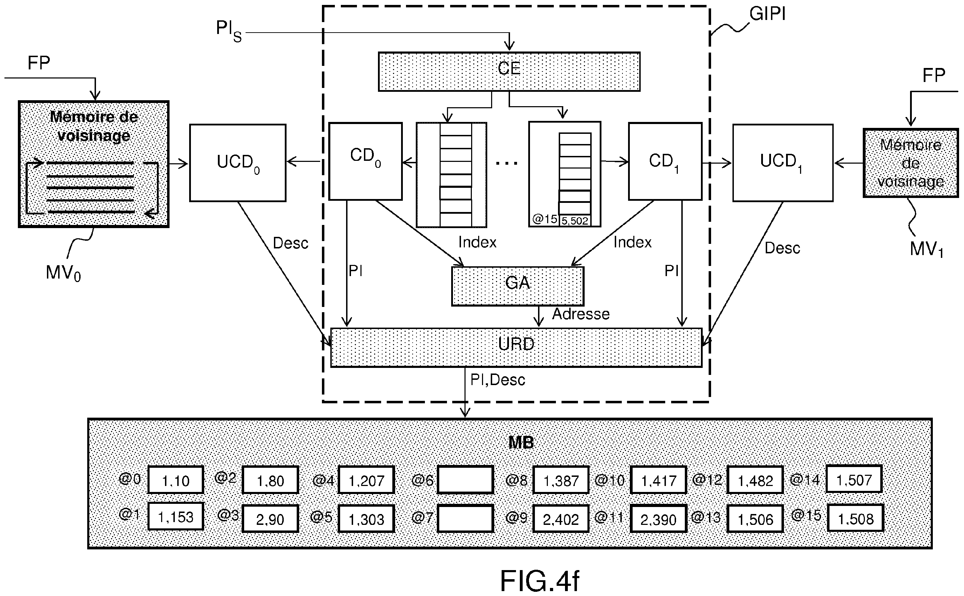

La figure 4f illustre la réception du dernier point d'intérêt du bandeau B et son chargement dans la file d'attente FIFO₁.

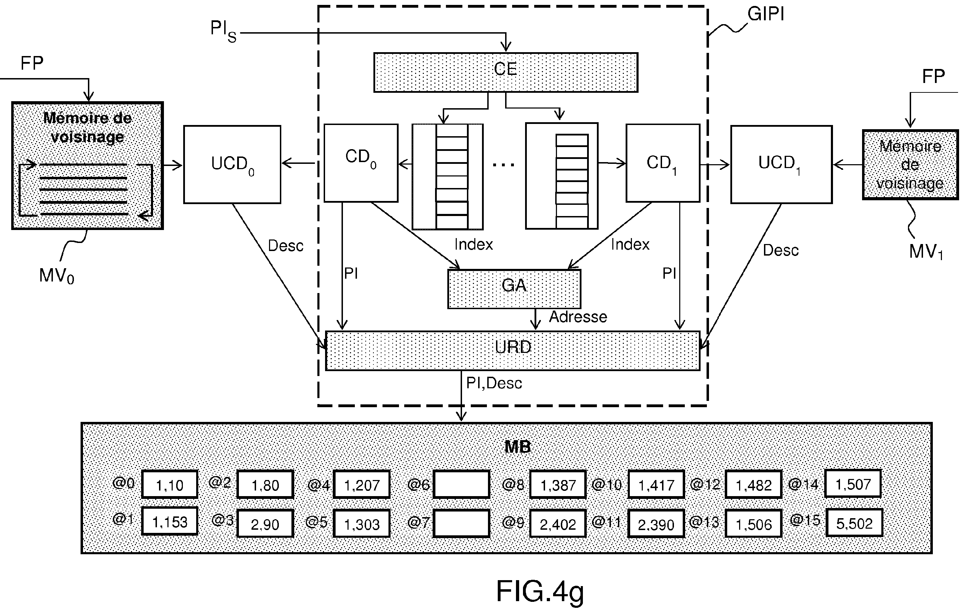

La figure 4g illustre la mise en mémoire bandeau à l'emplacement associé à l'index @15 du dernier point d'intérêt décrit.

Bien que sur les figures 4a-4g, le contenu de la mémoire bandeau MB est représenté uniquement par les coordonnées des points d'intérêts, ce ne sont pas les seules informations sauvegardées en mémoire puisque le résultat du calcul de descripteur est bien entendu également sauvegardé.

La gestion des index uniques pour chaque point d'intérêt permet un calcul spéculatif des descripteurs de points d'intérêt. A l'issue de la phase de traitement d'un bandeau d'image par le module de sélection de points d'intérêts SIPI et le module de gestion du calcul des descripteurs GIPI, un nombre limité de points d'intérêts sont retenus et décrits, ce nombre est au plus égal à P points d'intérêts par zone de sélection d'un bandeau, avec P un paramètre du dispositif.

Lorsque l'unité de récupération de descripteurs URD détecte le passage à une ligne d'image appartenant au bandeau d'image suivant, elle adresse une autre mémoire bandeau. Les mémoires bandeaux stockent à chaque emplacement mémoire associé à un index, une structure de données qui contient au moins les coordonnées du point d'intérêt détecté et son descripteur calculé. Si d'autres informations sont extraites par le module de détection DPI, elles peuvent être intégrées également dans cette structure de données.

Selon un second mode de réalisation, le dispositif 101 selon l'invention peut comprendre en outre un module d'appariement MA associé à une ou plusieurs mémoires bandeau globales MBG1,MBG2 de points d'intérêts et descripteurs ainsi qu'à un module de calcul d'appariement CA tel que représenté à la figure 2.

La figure 5 schématise le fonctionnement d'un dispositif d'appariement de points d'intérêts selon une architecture de l'art antérieur.

Le principe à la base d'une méthode d'appariement de points d'intérêts consiste principalement à réaliser les étapes suivantes. L'appariement est effectué entre une première image, appelée image de référence, et une seconde image, appelée image de test.

Selon les applications visées l'image de test peut être :
- une image précédente ou antérieure, du même flux d'images que celui auquel appartient l'image de référence, par exemple pour des applications de monovision par ordinateur,
- une image prise au même moment que l'image de référence, mais par une autre caméra, par exemple pour des applications de stéréovision par ordinateur,
- une image issue d'un ou plusieurs modèles appris et dont les points d'intérêt sont stockés en mémoire, par exemple pour des applications de recalage de modèles.

Sur la figure 5 est représentée une image de test I ainsi qu'une mémoire unique MM qui comporte une unique zone mémoire ZM dans laquelle sont stockés tous les points d'intérêts correspondant à l'image de test I.

La méthode d'appariement peut être paramétrée par un paramètre de filtrage spatial qui consiste à définir une zone de recherche F dans laquelle l'appariement est réalisé. Autrement dit, pour chaque point d'intérêt de l'image de référence, on recherche, dans l'image de test et au sein de la zone de recherche F centrée sur la position du point d'intérêt de l'image de référence, le point d'intérêt de l'image de test qui est le plus proche du point d'intérêt de l'image de référence. Le critère de proximité prend en compte les descripteurs des points d'intérêts et dépend de la méthode utilisée. Ce critère peut être basé, par exemple, sur une distance minimale selon la norme L1 des descripteurs.

Un inconvénient de l'utilisation d'une mémoire unique MM tel qu'illustré à la figure 5 est que les points d'intérêt et leurs descripteurs sont stockés dans la mémoire MM sous la forme d'une liste sans cohérence avec la position spatiale des points dans l'image. De ce fait, lorsque le module d'appariement effectue l'appariement d'un point d'intérêt, il doit parcourir l'ensemble de la liste des points d'intérêt de l'image de test pour tester leur position afin de vérifier si ils sont présents dans la zone de recherche définie par le filtrage spatial, puis effectuer le calcul d'appariement si ce point appartient bien à la zone de recherche. Ce type d'architecture présente également l'inconvénient de nécessiter un grand nombre d'accès mémoire et de calculs et de ne permettre le début de la phase d'appariement que lorsque tous les points d'intérêts de l'image de test ont été décrits.

L'architecture du dispositif 101 selon l'invention permet, notamment, de résoudre cet inconvénient en utilisant des mémoires bandeaux.

On décrit à présent le fonctionnement du module d'appariement MA de points d'intérêts selon l'invention, à l'appui des figures 6,7 et 8.

La figure 6 schématise un module d'appariement MA connecté à une première mémoire globale MBG^{R} comprenant plusieurs mémoires bandeaux Pl/descripteurs MB₁,...MB_{B} correspondant chacune à un bandeau d'une première image. Une mémoire bandeau MBₖ est apte à sauvegarder au moins les points d'intérêts sélectionnés retenus et leurs descripteurs associés. D'autres informations caractéristiques des points d'intérêts peuvent également être sauvegardées. Le module d'appariement MA est également connecté à une seconde mémoire globale MBG^{T} associé à une seconde image.

Le module d'appariement MA comprend principalement un module de contrôle d'appariement par bande d'image CTRL et une mémoire bandeau d'appariement globale MBAG^{R} comprenant plusieurs mémoires bandeaux d'appariement MBA₁,...MBAₖ,_{,}.. MBA_{T}. Les mémoires bandeau d'appariement correspondant chacune à un bandeau d'une image. Le nombre T de mémoires bandeau d'appariement peut être inférieur au nombre B de mémoires bandeau Pl/descripteurs. Chaque mémoire bandeau d'appariement est apte à sauvegarder au moins un point d'intérêt apparié et son score d'appariement. Le score d'appariement est propre à la méthode d'appariement utilisée et correspond à une information de proximité ou ressemblance entre deux points d'intérêts. Le calcul du score d'appariement utilise les descripteurs des points d'intérêts. La méthode d'appariement mise en oeuvre par le module d'appariement dépend fortement de la méthode de description de point d'intérêt utilisée. Le dispositif selon l'invention est compatible avec n'importe quelle méthode d'appariement tant que celle-ci utilise en entrée les caractéristiques des points d'intérêts telles que les descripteurs associés ainsi que la position 2D, l'orientation ou l'échelle. Ces données sont accessibles via les mémoires bandeau.

Le module de contrôle d'appariement CTRL réalise l'interface entre les mémoires bandeaux Pl/descripteurs MB₁,...MB_{B}, les mémoires bandeaux d'appariement MBA₁,...MBAₖ,_{,}.. MBA_{T} et le module de calcul d'appariement CA qui implémente la méthode d'appariement choisie. En particulier, le module de contrôle d'appariement CTRL est apte à accéder en lecture aux mémoires bandeaux Pl/descripteurs MB₁,...MB_{B} pour lire les points d'intérêts détectés et retenus (identifiés par leurs coordonnées spatiales) ainsi que leurs descripteurs associés et communiquer ces informations au module de calcul d'appariement. Le module de contrôle d'appariement CTRL est également apte à accéder en lecture et en écriture aux mémoires bandeaux d'appariement MBA₁,...MBAₖ,_{,}.. MBA_{T} pour échanger avec le module de calcul d'appariement CA les résultats courants des calculs d'appariement (points d'intérêts appariés et scores d'appariement).

La figure 7 donne une autre représentation du module d'appariement MA selon l'invention incluant une mémoire bandeaux Pl/descripteurs globale MBG^{R} comprenant un jeu de mémoires bandeaux Pl/descripteurs MB₁^{R},...MB_{B}^{R} associées aux points d'intérêts d'une image de référence, une mémoire bandeaux d'appariement globale MBAG^{R} comprenant un jeu de mémoires bandeaux d'appariement MBA₁^{R},...MBAₖ^{R},_{,}.. MBA_{T}^{R} associées aux points d'intérêts appariés de l'image de référence, une mémoire bandeaux Pl/descripteurs globale MBG^{T} comprenant un jeu de mémoires bandeaux Pl/descripteurs MB₁^{T},...MB_{B}^{T} associées aux points d'intérêts d'une image de test et une mémoire bandeaux d'appariement globale MBAG^{T} comprenant un jeu de mémoires bandeaux d'appariement MBA₁^{T},...MBAₖ^{T},_{,}.. MBA_{T}^{T} associées aux points d'intérêts appariés de l'image de test.

L'architecture du module d'appariement MA selon l'invention permet d'accélérer les traitements globaux effectués par le dispositif 101 notamment du fait que pendant qu'une première mémoire bandeau Pl/descripteurs MB₁^{R} est remplie par le module de gestion GIPI du calcul des descripteurs, le module d'appariement MA peut accéder en lecture à d'autres mémoires bandeau Pl/descripteurs pour exécuter les calculs d'appariements.

Ce fonctionnement est rendu possible de part le découpage des traitements par bandeaux d'image.

La figure 8 illustre la mise en oeuvre du module d'appariement MA selon l'invention. Sur cette figure est représentée l'image de test I_{T} et le point d'intérêt courant PI de l'image de référence que l'on cherche à apparier avec un point d'intérêt de l'image de test. La méthode d'appariement utilise un filtrage spatial avec une zone de recherche F telle que définie sur la figure 8. Cette zone de recherche s'étend à cheval sur deux bandeaux b-1,b de l'image. Ainsi, le calcul d'appariement ne nécessite que l'accès en lecture aux deux mémoires bandeaux Pl/descripteurs MB_{b-1}^{T}, MB_{b}^{T} de l'image de test correspondants aux deux bandeaux b-1,b. L'invention permet de limiter ainsi le nombre de points d'intérêts à tester par rapport à l'architecture de l'art antérieur utilisant une mémoire globale (figure 5).

Le nombre de mémoires bandeaux Pl/descripteurs auquel doit avoir accès le module d'appariement dépend de la taille de la zone de recherche du filtrage spatial par rapport à la taille des bandeaux d'image.

Le traitement par bandeau permet d'une part de limiter le nombre d'accès à la mémoire pour rapatrier les points d'intérêt à tester, le nombre de calculs de scores d'appariement et le nombre de comparaisons pour la recherche du score maximum et d'autre part de permettre l'exécution de la phase d'appariement de manière itérative. Le calcul se déclenche au plus tôt, sans nécessité de calculer l'intégralité des descripteurs des points d'intérêts de l'image, limitant ainsi la latence de traitement.

L'appariement d'un point s'effectue de manière itérative, c'est-à-dire qu'un point de test sélectionné comme meilleur point apparié peut être remis en question au cours de la recherche. Selon la méthode d'appariement utilisée, un ensemble de mémoires bandeau d'appariement est nécessaire afin de conserver les données intermédiaires, au moins le meilleur point apparié courant et le score d'appariement correspondant. L'adresse utilisée pour accéder aux données concernant les points d'intérêts dans la mémoire bandeau Pl/descripteurs est utilisée pour accéder à ces données intermédiaires.

Une mémoire bandeau d'appariement stocke le point d'intérêt apparié courant ainsi que le score d'appariement à la même adresse que le point d'intérêt correspondant dans la mémoire bandeau Pl/descripteurs.

Pour une image, le nombre de mémoires bandeau Pl/descripteur dépend du type d'appariement effectué ainsi que du filtrage spatial appliqué et du type d'image (référence ou test). Pour l'image de référence, il est d'au moins deux (un en écriture et un en lecture) mais devra être équivalent au nombre de bandeaux recouverts par le filtrage spatial + 1 dans le pire cas. Pour l'image de test, il est d'au moins deux (un en écriture et un en lecture) mais devra être équivalent au nombre de bandeaux recouverts par le filtrage spatial + 1 dans le pire cas. Dans le cas d'un appariement temporel, le nombre de mémoires bandeau Pl/descripteur test peut être égal au nombre de bandeau dans l'image.

Pour une image, le nombre de mémoires bandeau d'appariement dépend du type d'appariement effectué ainsi que le filtrage spatial appliqué et du type d'image (référence ou test). Pour l'image de référence, il est d'au moins un (correspondant à la mémoire bandeau Pl/descripteurs de référence en cours de lecture) mais devra être équivalent au nombre de bandeaux recouverts par le filtrage spatial dans le pire cas. Pour l'image de test, il est au moins égal à un mais devra être équivalent au nombre de bandeaux recouverts par le filtrage spatial dans le pire cas.

Le dispositif de calcul 100,101 selon l'invention dans son ensemble ainsi que chacun des modules qu'il comporte peuvent s'implémenter à partir d'éléments matériel.

En particulier, le dispositif selon l'invention dans son ensemble ainsi que chacun de ses modules pris séparément peut utiliser un ou plusieurs processeurs, un ou plusieurs circuits intégrés, un ou plusieurs composants électroniques et une ou plusieurs mémoires. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

## Revendications

1. Dispositif de calcul (100) pour la sélection et la description de points d'intérêts dans au moins une image décomposée en une pluralité de bandeaux, ledit dispositif (100) comprenant :
• un premier module (SIPI) de sélection et d'indexation de points d'intérêts parmi un ensemble de points d'intérêts détectés dans l'image, chaque bandeau étant décomposé en une ou plusieurs zones de sélection (Z₀, Z₁, Z₂, Z₃), ledit premier module (SIPI) étant configuré pour sélectionner, dans chaque zone de sélection, au plus un nombre P fixe de points d'intérêts candidats, et leur associer un index unique, le premier module (SIPI) comprenant une unité de sélection et d'indexation (USI₀, USI₁, USI₂, USI₃) pour chaque zone de sélection, chaque unité de sélection et d'indexation comprenant une mémoire dimensionnée pour sauvegarder un nombre fixe de points d'intérêts candidats et leurs index, et étant configurée pour, lorsque la mémoire est remplie avec P points d'intérêts sélectionnés, remplacer un point d'intérêt sauvegardé dans la mémoire par un nouveau point d'intérêt sélectionné dans la zone de sélection selon un critère de sélection prédéterminé,
• un deuxième module (GIPI) de gestion de calcul de descripteurs pour les points d'intérêts candidats,
• le premier module (SIPI) étant configuré pour transmettre au deuxième module (GIPI) les points d'intérêts candidats sauvegardés dans les unités de sélection et d'indexation et leur index dès la fin du traitement de K lignes d'un bandeau, avec K un nombre entier supérieur ou égal à 1 et strictement inférieur au nombre de lignes par bandeau.

2. Dispositif de calcul (100) selon la revendication 1 comprenant en outre au moins une mémoire de voisinage (MV) interfacée avec le deuxième module (GIPI) pour le calcul de descripteurs de points d'intérêts et un circuit de synchronisation (SYNC) apte à recevoir une séquence d'images sous la forme d'un flux de pixels (FP) et à transmettre ledit flux de pixels (FP) vers la mémoire de voisinage (MV) avec un retard configuré pour synchroniser le contenu de la mémoire de voisinage (MV) avec le calcul d'un descripteur d'un point d'intérêt courant.

3. Dispositif de calcul (100) selon l'une des revendications précédentes dans lequel la sélection de P points d'intérêts opérée par le premier module (SIPI) consiste à sélectionner, à un instant donné, les P points d'intérêts ayant un score de détection le plus élevé ou un score de détection le moins élevé ou à sélectionner les P points d'intérêts selon un ordre chronologique ou aléatoire.

4. Dispositif de calcul (100) selon l'une des revendications précédentes dans lequel le deuxième module (GIPI) comprend au moins une file d'attente (FIFO₀,FIFO₁) configurée pour recevoir les points d'intérêts candidats transmis par le premier module de sélection (SIPI) de points d'intérêts, au moins un organe de contrôle (CD₀,CD₁) de calcul de descripteurs de points d'intérêts agencé pour coopérer avec au moins une unité de calcul de descripteurs de points d'intérêts (UCD₀,UCD₁), au moins une mémoire bandeau (MB) dimensionnée pour sauvegarder les points d'intérêts candidats et leurs descripteurs calculés à une adresse unique et un organe de gestion d'adressage (GA) configuré pour générer ladite adresse unique à partir d'au moins l'index unique fourni par le premier module de sélection (SIPI).

5. Dispositif de calcul (100) selon l'une quelconque des revendications précédentes dans lequel ladite adresse unique est générée en outre à partir d'un identifiant de la zone de sélection (Z₀, Z₁, Z₂, Z₃) du point d'intérêt à sauvegarder.

6. Dispositif de calcul (100) selon l'une quelconque des revendications précédentes dans lequel le second module (GIPI) comprend un organe de contrôle (CD₀,CD₁) de calcul de descripteurs de points d'intérêts et une file d'attente (FIFO₀,FIFO₁) pour une ou plusieurs zone(s) de sélection (Z₀, Z₁, Z₂, Z₃).

7. Dispositif de calcul (100) selon l'une des revendications 2 à 6 dans lequel ladite au moins une mémoire de voisinage (MV₀, MV₁) est dimensionnée pour contenir uniquement une zone d'une image nécessaire au calcul des descripteurs pour les points d'intérêts correspondants à K lignes d'une ou plusieurs zones de sélection d'un bandeau.

8. Dispositif de calcul (101) selon l'une des revendications précédentes comprenant en outre un troisième module d'appariement (MA) de points d'intérêts détectés et sélectionnés dans une image de référence (IR) et une image de test (IT) à partir de leurs descripteurs associés sauvegardés respectivement dans un premier ensemble de mémoires bandeaux (MB₁^{R},...MB_{B}^{R}) et un second ensemble de mémoires bandeaux (MB₁^{T},...MB_{B}^{T}), ledit troisième module d'appariement (MA) étant configuré pour accéder en lecture de façon indépendante à l'une quelconque des mémoires bandeaux (MB) associées à l'image de référence (IR) et à l'image de test (IT).

9. Dispositif de calcul (101) selon la revendication 8 dans lequel le troisième module d'appariement (MA) comprend un organe de contrôle d'appariement (CTRL) pour piloter une unité de calcul d'appariement (CA), un ensemble de mémoires bandeaux d'appariement (MBA₁^{R},...MBAₖ^{R},_{,}.. MBA_{T}^{R}) associé à l'image de référence (IR) et un ensemble de mémoires bandeaux d'appariement (MBA₁^{T},...MBAₖ^{T},_{,}.. MBA_{T}^{T}) associé à l'image de test (IT), chaque mémoire bandeau d'appariement étant apte à sauvegarder au moins un point d'intérêt et un score d'appariement.

10. Dispositif de calcul (101) selon l'une des revendications 8 ou 9 dans lequel l'appariement est réalisé dans une zone de recherche spatiale de l'image en comparant chaque point d'intérêt à apparier de l'image de référence sauvegardé dans une mémoire bandeau (MB_{b}^{R}) avec les points d'intérêts de l'image de test situés dans la zone de recherche spatiale centrée sur la position du point d'intérêt à apparier et sauvegardés dans au moins une mémoire bandeau (MB_{b-1}^{T}, MB_{b}^{T}), la recherche d'appariement étant limitée aux mémoires bandeaux (MB_{b-1}^{T}, MB_{b}^{T}) de l'image de test correspondants à des bandeaux (b-1,b) de l'image de test qui ont une intersection non vide avec la zone de recherche spatiale.

11. Dispositif de calcul (101) selon l'une des revendications 8 à 10 dans lequel l'image de référence (IR) et l'image de test (IT) sont des images successives temporellement ou sont des images de la même scène provenant de deux flux d'images différents.

## Patentansprüche

1. Rechenvorrichtung (100) zum Auswählen und Beschreiben von Punkten von Interesse in mindestens einem Bild, das in eine Vielzahl von Streifen zerlegt ist, wobei die Vorrichtung (100) Folgendes umfasst:
• ein erstes Modul (SIPI) zum Auswählen und Indizieren von Punkten von Interesse aus einem Satz von in dem Bild erkannten Punkten von Interesse, wobei jeder Streifen in eine oder mehrere Auswahlbereiche (Z₀, Z₁, Z₂, Z₃) zerlegt ist, wobei das erste Modul (SIPI) so konfiguriert ist, dass es in jedem Auswahlbereich höchstens eine feste Anzahl P von Kandidatenpunkten von Interesse auswählt und einen eindeutigen Index mit ihnen assoziiert, wobei das erste Modul (SIPI) eine Auswahl- und Indizierungseinheit (USI₀, USI₁, USI₂, USI₃) für jeden Auswahlbereich umfasst, wobei jede Auswahl- und Indizierungseinheit einen Speicher umfasst, der zum Speichern einer festen Anzahl von Kandidatenpunkten von Interesse und deren Index bemessen ist, und zum Ersetzen, wenn der Speicher mit P ausgewählten Kandidatenpunkten von Interesse gefüllt ist, eines im Speicher gespeicherten Punkts von Interesse durch einen neuen Punkt von Interesse konfiguriert ist, der im Auswahlbereich nach einem vorbestimmten Auswahlkriterium ausgewählt wurde,
• ein zweites Modul (GIPI) zum Verwalten der Berechnung von Deskriptoren für die Kandidatenpunkte von Interesse,
• wobei das erste Modul (SIPI) zum Übertragen der in den Auswahl- und Indizierungseinheiten gespeicherten Kandidatenpunkte von Interesse und ihres Index zu dem zweiten Modul (GIPI) sofort nach Abschluss der Verarbeitung von K Zeilen eines Streifens konfiguriert ist, wobei K eine ganze Zahl gleich oder größer 1 und strikt kleiner als die Anzahl der Zeilen pro Streifen ist.

2. Rechenvorrichtung (100) nach Anspruch 1, die ferner mindestens einen Nachbarschaftsspeicher (MV) mit einer Schnittstelle zum zweiten Modul (GIPI) zum Berechnen von Punkte-von-Interesse-Deskriptoren und eine Synchronisationsschaltung (SYNC) umfasst, die eine Bildsequenz in Form eines Pixelstroms (FP) empfangen und den Pixelstrom (FP) mit einer Verzögerung zum Nachbarschaftsspeicher (MV) übertragen kann, die zum Synchronisieren des Inhalts des Nachbarschaftsspeichers (MV) mit der Berechnung eines aktuellen Punkte-von-Interesse-Deskriptors konfiguriert ist.

3. Rechenvorrichtung (100) nach einem der vorhergehenden Ansprüche, wobei die vom ersten Modul (SIPI) vorgenommene Auswahl von P Punkten von Interesse darin besteht, zu einem gegebenen Zeitpunkt die P Punkte von Interesse mit einer höchsten Erkennungswertung oder einer niedrigsten Erkennungswertung auszuwählen oder die P Punkte von Interesse in einer chronologischen oder zufälligen Reihenfolge auszuwählen.

4. Rechenvorrichtung (100) nach einem der vorhergehenden Ansprüche, wobei das zweite Modul (GIPI) mindestens eine Warteschlange (FIFO₀, FIFO₁), konfiguriert zum Empfangen der vom ersten Punkte-von-Interesse-Auswahlmodul (SIPI) übertragenen Kandidatenpunkte von Interesse, mindestens eine Steuereinrichtung (CD₀, CD₁) zum Berechnen von Punkte-von-Interesse-Deskriptoren, ausgelegt zum Zusammenarbeiten mit mindestens einer Punkte-von-Interesse-Deskriptoren-Berechnungseinheit (UCD₀, UCD₁), mindestens einen Streifenspeicher (MB), dimensioniert zum Speichern der Kandidatenpunkte von Interesse und ihrer berechneten Deskriptoren an einer eindeutigen Adresse, und eine Adressierungsmanagementeinrichtung (GA), konfiguriert zum Erzeugen der eindeutigen Adresse auf der Basis von mindestens dem vom ersten Auswahlmodul (SIPI) bereitgestellten eindeutigen Index, umfasst.

5. Rechenvorrichtung (100) nach einem der vorhergehenden Ansprüche, wobei die eindeutige Adresse ferner auf der Basis einer Kennung des Auswahlbereichs (Z₀, Z₁, Z₂, Z₃) des zu speichernden Punkts von Interesse erzeugt wird.

6. Rechenvorrichtung (100) nach einem der vorhergehenden Ansprüche, wobei das zweite Modul (GIPI) eine Steuereinrichtung (CD₀, CD₁) zur Berechnung von Punkte-von-Interesse-Deskriptoren und eine Warteschlange (FIFO₀, FIFO₁) für einen oder mehrere Auswahlbereiche (Z₀, Z₁, Z₂, Z₃) umfasst.

7. Rechenvorrichtung (100) nach einem der Ansprüche 2 bis 6, wobei der mindestens eine Nachbarschaftsspeicher (MV₀, MV₁) so dimensioniert ist, dass er nur einen Bereich eines Bildes enthält, der für die Berechnung von Punkte-von-Interesse-Deskriptoren erforderlich ist, die K Zeilen eines oder mehrerer Auswahlbereiche eines Streifens entsprechen.

8. Rechenvorrichtung (101) nach einem der vorhergehenden Ansprüche, die ferner ein drittes Modul (MA) zur Paarung von Punkten von Interesse umfasst, die in einem Referenzbild (IR) und einem Testbild (IT) auf der Basis ihrer assoziierten Deskriptoren, die in einem ersten Satz von Streifenspeichern (MB₁^{R},...MB_{B}^{R}) bzw. einem zweiten Satz von Streifenspeichern (MB₁^{T},...MB_{B}^{T}) gespeichert sind, erfasst und ausgewählt wurden, wobei das dritte Paarungsmodul (MA) für einen unabhängigen Lesezugriff auf einen beliebigen der mit dem Referenzbild (IR) und dem Testbild (IT) assoziierten Streifenspeicher (MB) konfiguriert ist.

9. Rechenvorrichtung (101) nach Anspruch 8, wobei das dritte Paarungsmodul (MA) eine Paarungssteuereinheit (CTRL) zum Ansteuern einer Paarungsberechnungseinheit (CA), einen Satz von mit dem Referenzbild (IR) assoziierten Paarungsstreifenspeichern (MBA₁^{R},...MBAₖ^{R},_{,}.. MBA_{T}^{R}) und einen Satz von mit dem Testbild (IT) assoziierten Paarungsstreifenspeichern (MBA₁^{T},...MBAₖ^{T},_{,}.. MBA_{T}^{T}) umfasst, wobei jeder Paarungsstreifenspeicher mindestens einen Punkt von Interesse und eine Paarungswertung speichern kann.

10. Rechenvorrichtung (101) nach Anspruch 8 oder 9, wobei die Paarung in einem räumlichen Suchbereich des Bildes durch Vergleichen jedes in einem Streifenspeicher (MB_{b}^{R}) gespeicherten zu paarenden Punkts von Interesse des Referenzbildes mit den Punkten von Interesse des Testbildes durchgeführt wird, die sich in dem auf die Position des zu paarenden Punkts von Interesse zentrierten räumlichen Suchbereich befinden und in mindestens einem Streifenspeicher (MB_{b-1}^{T}, MB_{b}^{T}) gespeichert sind, wobei die Paarungssuche auf die Streifenspeicher (MB_{b-1}^{T}, MB_{b}^{T}) des Testbildes beschränkt ist, die Streifen (b-1,b) des Testbildes entsprechen, die einen nicht leeren Schnittpunkt mit dem räumlichen Suchbereich haben.

11. Rechenvorrichtung (101) nach einem der Ansprüche 8 bis 10, wobei das Referenzbild (IR) und das Testbild (IT) zeitlich aufeinanderfolgende Bilder oder Bilder der gleichen Szene aus zwei verschiedenen Bildströmen sind.

## Claims

1. A calculation device (100) for the selection and the description of points of interest in at least one image decomposed into a plurality of strips, said device (100) comprising:
• a first module (SIPI) for selecting and indexing points of interest from among a set of points of interest detected in the image, each strip being decomposed into one or more selection areas (Z₀, Z₁, Z₂, Z₃), said first module (SIPI) being configured to select, in each selection area, at most a fixed number P of candidate points of interest, and associate a unique index with them, the first module (SIPI) comprising a selection and indexation unit (USI₀, USI₁, USI₂, USI₃) for each selection area, each selection and indexation unit comprising a memory dimensioned to save a fixed number of candidate points of interest and their indices, and being configured to replace, when the memory is filled with selected P points of interest, a point of interest saved in the memory with a new point of interest selected in the selection area according to a predetermined criterion,
• a second module (GIPI) for managing calculation of descriptors for the candidate points of interest,
• the first module (SIPI) being configured to transmit the candidate points of interest saved in the selection and indexation units and their index to the second module (GIPI) immediately at the end of the processing of K lines of a strip, with K an integer number greater than or equal to 1 and strictly less than the number of lines per strip.

2. The calculation device (100) according to claim 1, further comprising at least one neighbourhood memory (MV) interfaced with the second module (GIPI) for the calculation of descriptors of points of interest and a synchronization circuit (SYNC) able to receive a sequence of images in the form of a stream of pixels (FP) and to transmit said stream of pixels (FP) to the neighbourhood memory (MV) with a delay configured to synchronize the content of the neighbourhood memory (MV) with the calculation of a descriptor of a current point of interest.

3. The calculation device (100) according to any one of the preceding claims, wherein the selection of P points of interest which is effected by the first module (SIPI) consists in selecting, at a given instant, the P points of interest having a highest detection score or a lowest detection score or in selecting the P points of interest in a chronological or random order.

4. The calculation device (100) according to any one of the preceding claims, wherein the second module (GIPI) comprises at least one queue (FIFO₀, FIFO₁) configured to receive the candidate points of interest transmitted by the first module (SIPI) for selecting points of interest, at least one control facility (CD₀, CD₁) for calculating descriptors of points of interest and designed to cooperate with at least one unit for calculating descriptors of points of interest (UCD₀, UCD₁), at least one strip memory (MB) dimensioned to save the candidate points of interest and their calculated descriptors at a unique address and an addressing management facility (GA) configured to generate said unique address on the basis of at least the unique index provided by the first selection module (SIPI).

5. The calculation device (100) according to any one of the preceding claims, wherein said unique address is further generated on the basis of an identifier of the selection area (Z₀, Z₁, Z₂, Z₃) of the point of interest to be saved.

6. The calculation device (100) according to any one of the preceding claims, wherein the second module (GIPI) comprises a control facility (CD₀, CD₁) for calculating descriptors of points of interest and a queue (FIFO₀, FIFO₁) for one or more selection areas (Z₀, Z₁, Z₂, Z₃).

7. The calculation device (100) according to one of claims 2 to 6, wherein said at least one neighbourhood memory (MV₀, MV₁) is dimensioned to contain solely an area of an image necessary for the calculation of the descriptors for the points of interest corresponding to K lines of one or more selection areas of a strip.

8. The calculation device (101) according to any one of the preceding claims, further comprising a third module (MA) for pairing points of interest detected and selected in a reference image (IR) and a test image (IT) on the basis of their associated descriptors saved respectively in a first set of strip memories (MB₁^{R},...MB_{B}^{R}) and a second set of strip memories (MB₁^{T},...MB_{B}^{T}), said third pairing module (MA) being configured to independently read-access any one of the strip memories (MB) associated with the reference image (IR) and with the test image (IT).

9. The calculation device (101) according to claim 8, wherein the third pairing module (MA) comprises a pairing control facility (CTRL) for piloting a pairing calculation unit (CA), a set of pairing strip memories (MBA₁^{R},...MBAₖ^{R},_{,}.. MBA_{T}^{R}) which is associated with the reference image (IR) and a set of pairing strip memories (MBA₁^{T},...MBAₖ^{T},_{,}.. MBA_{T}^{T}) which is associated with the test image (IT), each pairing strip memory being able to save at least one point of interest and a pairing score.

10. The calculation device (101) according to one of claims 8 or 9, wherein the pairing is carried out in a spatial search area of the image by comparing each point of interest to be paired of the reference image saved in a strip memory (MB_{b}^{R}) with the points of interest of the test image which are situated in the spatial search area centred on the position of the point of interest to be paired and are saved in at least one strip memory (MB_{b-1}^{T}, MB_{b}^{T}), the pairing search being limited to the strip memories (MB_{b-1}^{T}, MB_{b}^{T}) of the test image which correspond to strips (b-1,b) of the test image which have a non-empty intersection with the spatial search area.

11. The calculation device (101) according to any one of claims 8 to 10, wherein the reference image (IR) and the test image (IT) are temporally successive images or are images of the same scene originating from two different streams of images.
